# EUROPEAN PATENT SPECIFICATION

(11) **EP 3 497 263 B1**
(45) Date of publication and mention of the grant of the patent: **14.01.2026**
(21) Application number: 17755024.1
(22) Date of filing: 14.08.2017
(51) Int. Cl.: C23C 22/83, C23C 22/34, C23C 22/56, C23C 22/66, C23C 22/12, C23C 22/13, C23C 22/78, C23C 22/73, C01B 25/37

(54) **SEALING COMPOSITION**
DICHTUNGSZUSAMMENSETZUNG
COMPOSITION DE SCELLEMENT

(30) Priority: 12.08.2016 US 201662374188 P; 12.08.2016 US 201662374199 P
(43) Date of publication of application: 19.06.2019
(73) Proprietor: PRC-Desoto International, Inc., Sylmar, California 91342 (US)
(72) Inventor: MORRIS, Eric L., Murrieta, California 92563 (US); POST, Gordon L., Pittsburgh, Pennsylvania 15243 (US); MAYO, Michael A., Pittsburgh, Pennsylvania 15239 (US); OKERBERG, Brian C., Gibsonia, Pennsylvania 15044 (US); LIM, Mary Lyn Chong, Allison Park, Pennsylvania 15101 (US)
(74) Representative: f & e patent
(86) International application number: PCT/US2017/046730
(87) International publication number: WO 2018/031992

(56) References cited:
- WO-A1-2013/185131
- WO-A1-2014/035691
- WO-A1-2014/151617
- US-A- 5 756 218
- R G BUCHHEIT ET AL: "Chromate-free corrosion resistant conversion coatings for aluminum alloys", TECHNICAL REPORT - 1995 ANNUAL MEETING AND EXHIBITION OF THE MINERALS, METALS AND MATERIALS SOCIETY (TMS), LAS VEGAS, NV (UNITED STATES), 1 March 1995 (1995-03-01), pages 1 - 11, XP055133252, ISBN: 978-0-87-339317-1, DOI: 10.2172/28379

## Description

### FIELD

The present invention relates to sealing compositions and methods for treating a metal substrate. The present invention also relates to a coated metal substrate.

### BACKGROUND

The oxidation and degradation of metals used in aerospace, commercial, and private industries are a serious and costly problem. To prevent the oxidation and degradation of the metals used in these applications, an inorganic protective coating can be applied to the metal surface. This inorganic protective coating, also referred to as a conversion coating, may be the only coating applied to the metal, or the coating can be an intermediate coating to which subsequent coatings are applied.

Chromate based coatings are currently used as inorganic conversion coatings because they provide corrosion resistant properties and adhesion for application of subsequent coatings. However, due to environmental concerns over chromium based compounds in the environment, there is a need for an environmentally safer replacement for chromate based conversion coatings. There is also a need for environmentally safer conversion coatings that can provide corrosion resistance to an underlying metal surface and adhesion to subsequently applied coatings.

Cerium and other rare earth element containing coatings have been identified as potential replacements for chromate based coatings in metal finishing. These coatings include cerium and other rare earth element containing coatings that are formed by various processes such as immersion, electroplating from a cerium nitrate solution, plating from an acidic cerium chloride containing solution and an oxidant (at elevated temperatures), as well as multi-step processes, and electrolytic and non-electrolytic processes having a sealing step.

However, at least some of the coatings prepared using these compositions and methods do not perform as well as those formed using chromate treatments and/or can develop corrosion and/or pits on the surface. Further, at least some of the cerium and other rare earth element-containing coatings known in the art can also suffer from one or more of the following disadvantages: (1) a tendency of the rare earth element to precipitate in solution away from the metal surface in the form of a sludge-like material; (2) difficulty in obtaining a uniform coating which does not tend to over-coat and exhibit poor adhesion to the substrate; (3) the necessity to use multiple steps and extensive periods of time to deposit a coating; and (4) the necessity to use specific conversions and solution compositions in order to coat multiply alloys, especially aluminum 2024 alloys.

Therefore, there is a need for a method of treating a substrate that can replace chromate based conversion coatings and that overcomes several of the deficiencies, disadvantages and undesired parameters of known replacements for chromate based conversion coatings. WO-A-2013/185131 discloses conversion coatings for aluminium substrates that contain an indicator. The solution used contains 10 to 5000 ppm of a metal and typically forms coatings of 1-500 nm thick. A variety of metals may be used including lithium. The composition may used as a posttreatment (sealing) of zirconate, titanate or rare earth conversion coatings.

### SUMMARY

Disclosed herein is a method of treating a substrate comprising: contacting at least a portion of the substrate surface with a sealing composition comprising a lithium cation. According to the present invention, the method may further comprise contacting at least a portion of the substrate with a lanthanide series metal cation, a Group IIIB metal cation, a Group IVB metal cation, or a combination thereof. According to the invention as defined in claim 1, the sealing composition is applied to provide a layer of the dried sealing composition having a thickness of 5 nm to 550 nm.

Also disclosed is a system as defined in claim 9 for treating a substrate comprising: a conversion composition for treating at a least a portion of the substrate, the conversion composition comprising a lanthanide series metal cation, a Group IIIB metal cation, a Group IVB metal cation, or a combination thereof; and a sealing composition for treating at least a portion of the substrate, the sealing composition comprising a lithium cation.

Also disclosed are substrates obtainable by the system and/or methods.

### BRIEF DESCRIPTION OF THE DRAWINGS

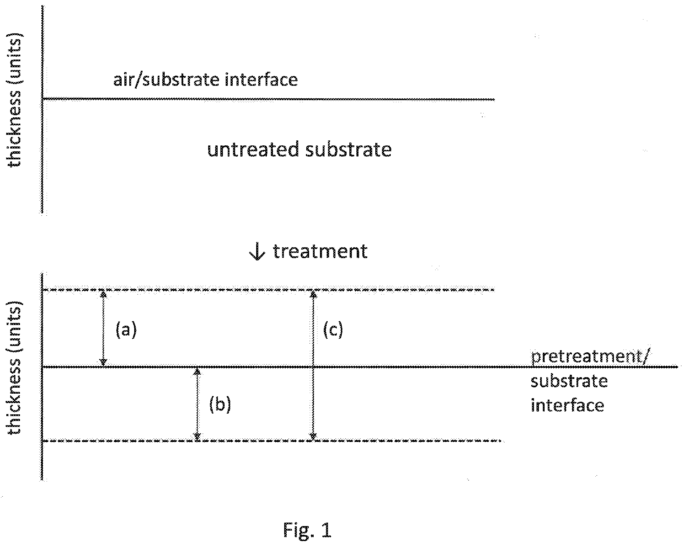

Fig. 1 shows a schematic illustrating thickness of a layer of the sealing composition on a substrate surface.

### DETAILED DESCRIPTION

Disclosed herein according to the invention is a system for treating a substrate comprising, or in some instances, consisting essentially of, or in some instances, consisting of, a sealing composition comprising, or in instances, consisting essentially of, or in some instances, consisting of, a lithium cation. The system further comprises or in some instances consist essentially of, or in some instances, consist of, a conversion composition comprising, or in some instances, consisting essentially of, or in some instances, consisting of, a lanthanide series metal cation, a Group IIIB metal cation, a Group IVB metal cation, or a combination thereof. In some instances, the system may further comprise, or consist essentially of, or consist of, a cleaning composition and/or a deoxidizer.

As mentioned above, also disclosed herein is a method of treating a substrate comprising, or in some instances, consisting essentially of, or in some instances, consisting of: contacting at least a portion of the substrate surface with a sealing composition comprising, or in some instances, consisting essentially of, or in some instances, consisting of, a lithium cation. According to the invention, the method may also comprise, or in some instances, consist essentially of, or in some instances, consist of, contacting at least a portion of the substrate surface with a conversion composition comprising, or in some instances, consisting essentially of, or in some instances, consisting of, a lanthanide series metal cation, a Group IIIB metal cation, a Group IVB metal cation, or a combination thereof.

As described herein, a substrate treated with the system and/or method of the present invention may comprise, or in some instances consist essentially of, or in some instances, consist of, a layer formed from the sealing composition comprising a lithium cation. In some instances, the substrate may further comprise a film or a layer formed from the conversion composition comprising cations of a lanthanide series metal, a Group IIIB metal, and/or a Group IVB metal.

Suitable substrates that may be used in the present invention include metal substrates, metal alloy substrates, and/or substrates that have been metallized, such as nickel plated plastic. According to the present invention, the metal or metal alloy can comprise or be steel, aluminum, zinc, nickel, and/or magnesium. For example, the steel substrate could be cold rolled steel, hot rolled steel, electrogalvanized steel, and/or hot dipped galvanized steel. Aluminum alloys of the 1XXX, 2XXX, 3XXX, 4XXX, 5XXX, 6XXX, or 7XXX series as well as clad aluminum alloys also may be used as the substrate. Aluminum alloys may comprise 0.01% by weight copper to 10% by weight copper. Aluminum alloys which are treated may also include castings, such as 1XX.X, 2XX.X, 3XX.X, 4XXX, 5XX.X, 6XX.X, 7XX.X, 8XX.X, or 9XX.X (e.g.: A356.0). Magnesium alloys of the AZ31B, AZ91C, AM60B, or EV31A series also may be used as the substrate. The substrate used in the present invention may also comprise titanium and/or titanium alloys, zinc and/or zinc alloys, and/or nickel and/or nickel alloys. According to the present invention, the substrate may comprise a portion of a vehicle such as a vehicular body (e.g., without limitation, door, body panel, trunk deck lid, roof panel, hood, roof and/or stringers, rivets, landing gear components, and/or skins used on an aircraft) and/or a vehicular frame. As used herein, "vehicle" or variations thereof includes, but is not limited to, civilian, commercial and military aircraft, and/or land vehicles such as cars, motorcycles, and/or trucks.

The sealing composition comprises a lithium cation. The lithium cation may be in the form of a lithium salt. In addition, the sealing composition also may further comprise at least one Group IA metal cation other than lithium, a Group VB metal cation, and/or Group VIB metal cation. The at least one Group IA metal cation other than lithium, a Group VB metal cation, and/or Group VIB metal cation may be in the form of a salt. Nonlimiting examples of anions suitable for forming a salt with the lithium, Group IA cations other than lithium, Group VB cations, and/or Group VIB cations include carbonates, hydroxides, nitrates, halogens, sulfates, phosphates and silicates (e.g., orthosilicates and metasilicates) such that the metal salt may comprise a carbonate, an hydroxide, a nitrate, a halide, a sulfate, a phosphate, a silicate (e.g., orthosilicate or metasilicate), a permanganate, a chromate, a vanadate, a molybdate, and/or a perchlorate.

According to the present invention, the metal salts of the sealing composition (i.e., the salts of lithium, Group IA metals other than lithium, Group VB, and/or Group VIB) each may be present in the sealing composition in an amount of at least 25 ppm, such as at least 150 ppm, such as at least 500 ppm (calculated as total compound) based on total weight of the sealing composition, and in some instances, no more than 30000 ppm, such as no more than 2000 ppm, such as no more than 1500 ppm (calculated as total compound) based on total weight of the sealing composition. According to the present invention, the metal salts of the sealing composition (i.e., the salts of lithium, Group IA metals other than lithium, Group VB, and/or Group VIB) each may be present in the sealing composition in an amount of 25 ppm to 30000 ppm, such as 150 ppm to 2000 ppm, such as 500 ppm to 1500 (calculated as total compound) based on total weight of the sealing composition.

According to the present invention, the lithium cation, the Group IA cation other than lithium, the Group VB metal cation, and the Group VIB metal cation each may be present in the sealing composition in an amount of at least 5 ppm, such as at least 50 ppm, such as at least 150 ppm, such as at least 250 ppm (calculated as cation) based on total weight of the sealing composition, and in some instances, may be present in an amount of no more than 5500 ppm, such as no more than 1200 ppm, such as no more than 1000 ppm, such as no more than 500 ppm, (calculated as cation) based on total weight of the sealing composition. In some instances, according to the present invention, the lithium cation, the Group IA cation other than lithium, the Group VB metal cation, and the Group VIB metal cation each may be present in the sealing composition in an amount of 5 ppm to 5500 ppm, such as 50 ppm to 1000 ppm, (calculated as cation) based on total weight of the sealing composition, such as 150 ppm to 500 ppm.

According to the present invention, the lithium salt of the present invention may comprise an inorganic lithium salt, an organic lithium salt, or combinations thereof. According to the present invention, the anion and the cation of the lithium salt both may be soluble in water. According to the present invention, for example, the lithium salt may have a solubility constant in water at a temperature of 25° C. (K; 25° C) of at least 1x10⁻¹¹, such as least 1x10⁻⁴, and in some instances, may be no more than 5x10⁺². According to the present invention, the lithium salt may have a solubility constant in water at a temperature of 25° C. (K ;25° C.) of 1x10⁻¹¹ to 5x10⁺², such as 1x10⁻⁴ to 5x10⁺². As used herein, "solubility constant" means the product of the equilibrium concentrations of the ions in a saturated aqueous solution of the respective lithium salt. Each concentration is raised to the power of the respective coefficient of ion in the balanced equation. The solubility constants for various salts can be found in the *Handbook of Chemistry and* Physics.

According to the present invention, the sealing composition of the present invention may an include oxidizing agent, such as hydrogen peroxide, persulfates, perchlorates, sparged oxygen, bromates, peroxi-benzoates, ozone, and the like, or combinations thereof. For example, the sealing composition may comprise 0.1 wt % to 15 wt % of an oxidizing agent based on total weight of the sealing composition, such as 2 wt% to 10 wt %, such as 6 wt% to 8 wt%. Alternatively, according to the present invention, the sealing composition may be substantially free, or in some cases, essentially free, or in some cases, completely free, of an oxidizing agent.

According to the present invention, the sealing composition may exclude Group IIA metal cations or Group IIA metal-containing compounds, including but not limited to calcium. Non-limiting examples of such materials include Group IIA metal hydroxides, Group IIA metal nitrates, Group IIA metal halides, Group IIA metal sulfamates, Group IIA metal sulfates, Group IIA carbonates and/or Group IIA metal carboxylates. When a sealing composition and/or a coating or a layer, respectively, formed from the same is substantially free, essentially free, or completely free of a Group IIA metal cation, this includes Group IIA metal cations in any form, such as, but not limited to, the Group IIA metal-containing compounds listed above.

According to the present invention, the sealing composition may exclude chromium or chromium-containing compounds. As used herein, the term "chromium-containing compound" refers to materials that include hexavalent chromium. Non-limiting examples of such materials include chromic acid, chromium trioxide, chromic acid anhydride, dichromate salts, such as ammonium dichromate, sodium dichromate, potassium dichromate, and calcium, barium, magnesium, zinc, cadmium, and strontium dichromate. When a sealing composition and/or a coating or a layer, respectively, formed from the same is substantially free, essentially free, or completely free of chromium, this includes chromium in any form, such as, but not limited to, the hexavalent chromium-containing compounds listed above.

Thus, optionally, according to the present invention, the present sealing compositions and/or coatings or layers, respectively, deposited from the same may be substantially free, may be essentially free, and/or may be completely free of one or more of any of the elements or compounds listed in the preceding paragraph. A sealing composition and/or coating or layer, respectively, formed from the same that is substantially free of chromium or derivatives thereof means that chromium or derivatives thereof are not intentionally added, but may be present in trace amounts, such as because of impurities or unavoidable contamination from the environment. In other words, the amount of material is so small that it does not affect the properties of the sealing composition; in the case of chromium, this may further include that the element or compounds thereof are not present in the sealing compositions and/or coatings or layers, respectively, formed from the same in such a level that it causes a burden on the environment. The term "substantially free" means that the sealing compositions and/or coating or layers, respectively, formed from the same contain less than 10 ppm of any or all of the elements or compounds listed in the preceding paragraph, based on total weight of the composition or the layer, respectively, if any at all. The term "essentially free" means that the sealing compositions and/or coatings or layers, respectively, formed from the same contain less than 1 ppm of any or all of the elements or compounds listed in the preceding paragraph, if any at all. The term "completely free" means that the sealing compositions and/or coatings or layers, respectively, formed from the same contain less than 1 ppb of any or all of the elements or compounds listed in the preceding paragraph, if any at all.

According to the present invention, the sealing composition may, in some instances, exclude phosphate ions or phosphate-containing compounds and/or the formation of sludge, such as aluminum phosphate, iron phosphate, and/or zinc phosphate, formed in the case of using a treating agent based on zinc phosphate. As used herein, "phosphate-containing compounds" include compounds containing the element phosphorous such as ortho phosphate, pyrophosphate, metaphosphate, tripolyphosphate, organophosphonates, and the like, and can include, but are not limited to, monovalent, divalent, or trivalent cations such as: sodium, potassium, calcium, zinc, nickel, manganese, aluminum and/or iron. When a composition and/or a layer or coating comprising the same is substantially free, essentially free, or completely free of phosphate, this includes phosphate ions or compounds containing phosphate in any form.

Thus, according to the present invention, sealing composition and/or layers deposited from the same may be substantially free, or in some cases may be essentially free, or in some cases may be completely free, of one or more of any of the ions or compounds listed in the preceding paragraph. A sealing composition and/or layers deposited from the same that is substantially free of phosphate means that phosphate ions or compounds containing phosphate are not intentionally added, but may be present in trace amounts, such as because of impurities or unavoidable contamination from the environment. In other words, the amount of material is so small that it does not affect the properties of the composition; this may further include that phosphate is not present in the sealing compositions and/or layers deposited from the same in such a level that they cause a burden on the environment. The term "substantially free" means that the sealing compositions and/or layers deposited from the same contain less than 5 ppm of any or all of the phosphate anions or compounds listed in the preceding paragraph, based on total weight of the composition or the layer, respectively, if any at all. The term "essentially free" means that the sealing compositions and/or layers comprising the same contain less than 1 ppm of any or all of the phosphate anions or compounds listed in the preceding paragraph. The term "completely free" means that the sealing compositions and/or layers comprising the same contain less than 1 ppb of any or all of the phosphate anions or compounds listed in the preceding paragraph, if any at all.

According to the present invention, the sealing composition may, in some instances, exclude fluoride or fluoride sources. As used herein, "fluoride sources" include rnonofluorides, bifluorides, fluoride complexes, and mixtures thereof known to generate fluoride ions. When a composition and/or a layer or coating comprising the same is substantially free, essentially free, or completely free of fluoride, this includes fluoride ions or fluoride sources in any form, but does not include unintentional fluoride that may be present in a bath as a result of, for example, carry-over from prior treatment baths in the processing line, municipal water sources (e.g.: fluoride added to water supplies to prevent tooth decay), fluoride from a pretreated substrate, or the like. That is, a bath that is substantially free, essentially free, or completely free of fluoride, may have unintentional fluoride that may be derived from these external sources, even though the composition used to make the bath prior to use on the processing line was substantially free, essentially free, or completely free of fluoride.

For example, the sealing composition may be substantially free of any fluoride-sources, such as ammonium and alkali metal fluorides, acid fluorides, fluoroboric, fluorosilicic, fluorotitanic, and fluorozirconic acids and their ammonium and alkali metal salts, and other inorganic fluorides, nonexclusive examples of which are: zinc fluoride, zinc aluminum fluoride, titanium fluoride, zirconium fluoride, nickel fluoride, ammonium fluoride, sodium fluoride, potassium fluoride, and hydrofluoric acid, as well as other similar materials known to those skilled in the art.

Fluoride present in the sealing composition that is not bound to metals ions such as Group IVB metal ions, or hydrogen ion, defined herein as "free fluoride," may be measured as an operational parameter in the sealing composition bath using, for example, an Orion Dual Star Dual Channel Benchtop Meter equipped with a fluoride ion selective electrode ("ISE") available from Thermoscientific, the symphony^{®} Fluoride Ion Selective Combination Electrode supplied by VWR International, or similar electrodes. See, e.g., Light and Cappuccino, *Determination of fluoride in toothpaste using an ion-selective electrode,* J. Chem. Educ., 52:4, 247-250, April 1975. The fluoride ISE may be standardized by immersing the electrode into solutions of known fluoride concentration and recording the reading in millivolts, and then plotting these millivolt readings in a logarithmic graph. The millivolt reading of an unknown sample can then be compared to this calibration graph and the concentration of fluoride determined. Alternatively, the fluoride ISE can be used with a meter that will perform the calibration calculations internally and thus, after calibration, the concentration of the unknown sample can be read directly.

Fluoride ion is a small negative ion with a high charge density, so in aqueous solution it is frequently complexed with metal ions having a high positive charge density, such as Group IVB metal ions, or with hydrogen ion. Fluoride anions in solution that are ionically or covalently bound to metal cations or hydrogen ion are defined herein as "bound fluoride." The fluoride ions thus complexed are not measurable with the fluoride ISE unless the solution they are present in is mixed with an ionic strength adjustment buffer (e.g.: citrate anion or EDTA) that releases the fluoride ions from such complexes. At that point (all of) the fluoride ions are measurable by the fluoride ISE, and the measurement is known as "total fluoride". Alternatively, the total fluoride can be calculated by comparing the weight of the fluoride supplied in the sealer composition by the total weight of the composition.

According to the present invention, the treatment composition may, in some instances, be substantially free, or in some instances, essentially free, or in some instances, completely free, of cobalt ions or cobalt-containing compounds. As used herein, "cobalt-containing compounds" include compounds, complexes or salts containing the element cobalt such as, for example, cobalt sulfate, cobalt nitrate, cobalt carbonate and cobalt acetate. When a composition and/or a layer or coating comprising the same is substantially free, essentially free, or completely free of cobalt, this includes cobalt ions or compounds containing cobalt in any form.

According to the present invention, the treatment composition may, in some instances, be substantially free, or in some instances, essentially free, or in some instances, completely free, of vanadium ions or vanadium-containing compounds. As used herein, "vanadium-containing compounds" include compounds, complexes or salts containing the element vanadium such as, for example, vanadates and decavanadates that include counterions of alkali metal or ammonium cations, including, for example, sodium ammonium decavanadate. When a composition and/or a layer or coating comprising the same is substantially free, essentially free, or completely free of vanadium, this includes vanadium ions or compounds containing vanadium in any form.

According to the present invention, the sealing composition may optionally further contain an indicator compound, so named because it indicates, for example, the presence of a chemical species, such as a metal ion, the pH of a composition, and the like. An "indicator", "indicator compound", and like terms as used herein refer to a compound that changes color in response to some external stimulus, parameter, or condition, such as the presence of a metal ion, or in response to a specific pH or range of pHs.

The indicator compound used according to the present invention can be any indicator known in the art that indicates the presence of a species, a particular pH, and the like. For example, a suitable indicator may be one that changes color after forming a metal ion complex with a particular metal ion. The metal ion indicator is generally a highly conjugated organic compound. A "conjugated compound" as used herein, and as will be understood by those skilled in the art, refers to a compound having two double bonds separated by a single bond, for example two carbon-carbon double bonds with a single carbon-carbon bond between them. Any conjugated compound can be used according to the present invention.

Similarly, the indicator compound can be one in which the color changes upon change of the pH; for example, the compound may be one color at an acidic or neutral pH and change color in an alkaline pH, or vice versa. Such indicators are well known and widely commercially available. An indicator that "changes color upon transition from a first pH to a second pH" (i.e., from a first pH to a second pH that is more or less acidic or alkaline) therefore has a first color (or is colorless) when exposed to a first pH and changes to a second color (or goes from colorless to colored) upon transition to a second pH (i.e., one that is either more or less acidic or alkaline than the first pH). For example, an indicator that "changes color upon transition to a more alkaline pH (or less acidic pH) goes from a first color/colorless to a second color/color when the pH transitions from acidic/neutral to alkaline. For example, an indicator that "changes color upon transition to a more acidic pH (or less alkaline pH) goes from a first color/colorless to a second color/color when the pH transitions from alkaline/neutral to acidic.

Non-limiting examples of such indicator compounds include methyl orange, xylenol orange, catechol violet, bromophenol blue, green and purple, eriochrome black T, Celestine blue, hematoxylin, calmagite, gallocyanine, and combinations thereof. Optionally, the indicator compound may comprise an organic indicator compound that is a metal ion indicator. Nonlimiting examples of indicator compounds include those found in Table 1. Fluorescent indicators, which will emit light in certain conditions, can also be used according to the present invention, although the use of a fluorescent indicator also may be specifically excluded. That is, alternatively, conjugated compounds that exhibit fluorescence are specifically excluded. As used herein, "fluorescent indicator" and like terms refer to compounds, molecules, pigments, and/or dyes that will fluoresce or otherwise exhibit color upon exposure to ultraviolet or visible light. To "fluoresce" will be understood as emitting light following absorption of shorter wavelength light or other electromagnetic radiation. Examples of such indicators, often referred to as "tags," include acridine, anthraquinone, coumarin, diphenylmethane, diphenylnaphthlymethane, quinoline, stilbene, triphenylmethane, anthracine and/or molecules containing any of these moieties and/or derivatives of any of these such as rhodamines, phenanthridines, oxazines, fluorones, cyanines and/or acridines.

**TABLE 1**

| Compound | Structure | CAS Reg. No. |
|---|---|---|
| Catechol Violet | 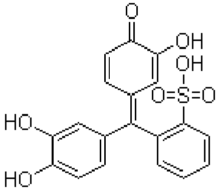 | 115-41-3 |
| Synonyms: | | |
| Catecholsulfonphthalein; Pyrocatecholsulfonephthalein; Pyrocatechol Violet | | |
| Xylenol Orange | 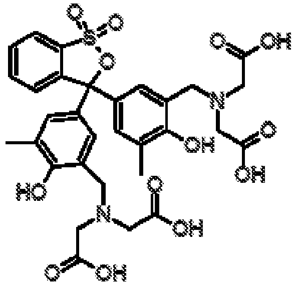 | 3618-43-7 |
| Synonym: | | |
| **3,3'-Bis[*N,N-*bis(carboxymethyl)aminomethyl]-*o*-cresolsulfonephthalein tetrasodium salt** | | |

According to the present invention, the conjugated compound useful as indicator may for example comprise catechol violet, as shown in Table 1. Catechol violet (CV) is a sulfone phthalein dye made from condensing two moles of pyrocatechol with one mole of o-sulfobenzoic acid anhydride. It has been found that CV has indicator properties and when incorporated into compositions having metal ions, it forms complexes, making it useful as a complexiometric reagent. As the composition containing the CV chelates metal ions coming from the metal substrate (i.e., those having bi- or higher valence), a generally blue to blue-violet color is observed.

Xylenol orange, as shown in Table 1 may likewise be employed in the compositions according to the present invention. It has been found that xylenol orange has metal ion (i.e., those having bi- or higher valence) indicator properties and when incorporated into compositions having metal ions, it forms complexes, making it useful as a complexiometric reagent. As the composition containing the xylenol orange chelates metal ions, a solution of xylenol orange turns from red to a generally blue color.

According to the present invention, the indicator compound may be present in the sealing composition in an amount of at least 0.01 g/1000 g sealing composition, such as at least 0.05 g/1000 g sealing composition, and in some instances, no more than 3 g/1000 g sealing composition, such as no more than 0.3g/1000 g sealing composition. According to the present invention, the indicator compound may be present in the sealing composition in an amount of 0.01 g/1000 g sealing composition to 3 g/1000 g sealing composition, such as 0.05 g/1000 g sealing composition to 0.3 g/1000 g sealing composition.

According to the present invention, the indicator compound changing color in response to a certain external stimulus provides a benefit when using the sealing composition in that it can serve, for example, as a visual indication that a substrate has been treated with the composition. For example, a sealing composition comprising an indicator that changes color when exposed to a metal ion that is present in the substrate will change color upon complexing with metal ions in that substrate; this allows the user to see that the substrate has been contacted with the composition. Similar benefits can be realized by depositing an alkaline or acid layer on a substrate and contacting the substrate with a composition of the present invention that changes color when exposed to an alkaline or acidic pH.

Optionally, the sealing composition of the present invention may further comprise a nitrogen-containing heterocyclic compound. The nitrogen-containing heterocyclic compound may include cyclic compounds having 1 nitrogen atom, such as pyrroles, and azole compounds having 2 or more nitrogen atoms, such as pyrazoles, imidazoles, triazoles, tetrazoles and pentazoles, 1 nitrogen atom and 1 oxygen atom, such as oxazoles and isoxazoles, or 1 nitrogen atom and 1 sulfur atom, such as thiazoles and isothiazoles. Nonlimiting examples of suitable azole compounds include 2,5-dimercapto-1,3,4-thiadiazole (CAS:l072-71-5), lH-benzotriazole (CAS: 95-14-7), 1H-1,2,3-triazole (CAS: 288-36-8), 2-amino-5-mercapto-1,3,4-thiadiazole (CAS: 2349-67-9), also named 5-amino-1,3,4-thiadiazole-2-thiol, and 2-amino-1,3,4-thiadiazole (CAS: 4005-51-0). In some embodiments, for example, the azole compound comprises 2,5-dimercapto-1,3,4-thiadiazole. Additionally, according to the present invention, the nitrogen-containing heterocyclic compound may be in the form of a salt, such as a sodium salt.

The nitrogen-containing heterocyclic compound may be present in the sealing composition at a concentration of at least 0.0005 g per liter of composition, such as at least 0.0008 g per liter of composition, such as at least 0.002 g per liter of composition, and in some instances, may be present in the sealing composition in an amount of no more than 3 g per liter of composition, such as no more than 0.2 g per liter of composition, such as no more than 0.1 g per liter of composition. According to the present invention, the nitrogen-containing heterocyclic compound may be present in the sealing composition (if at all) at a concentration of 0.0005 g per liter of composition to 3 g per liter of composition, such as 0.0008 g per liter of composition to 0.2 g per liter of composition, such as 0.002 g per liter of composition to 0.1 g per liter of composition.

According to the present invention, the sealing composition may comprise an aqueous medium and optionally may contain other materials such as at least one organic solvent. Nonlimiting examples of suitable such solvents include propylene glycol, ethylene glycol, glycerol, low molecular weight alcohols, and the like. When present, if at all, the organic solvent may be present in the sealing composition in an amount of at least 1 g solvent per liter of sealing composition, such as at least about 2 g solvent per liter of sealing solution, and in some instances, may be present in an amount of no more than 40 g solvent per liter of sealing composition, such as no more than 20 g solvent per liter of sealing solution. According to the present invention, the organic solvent may be present in the sealing composition, if at all, in an amount of 1 g solvent per liter of sealing composition to 40 g solvent per liter of sealing composition, such as 2 g solvent per liter of sealing composition to 20 g solvent per liter of sealing composition.

According to the present invention, the pH of the sealing composition is at least 10, such as at least 11, and is no higher than 12.5, such as no higher than 12, such as no higher than 11.5. According to the present invention, the pH of the sealing composition may be 10 to 12.5, such as 10 to 12, such as 11 to 11.5. The pH of the sealing composition may be adjusted using, for example, any acid and/or base as is necessary. According to the present invention, the pH of the sealing composition may be maintained through the inclusion of an acidic material, including carbon dioxide, water soluble and/or water dispersible acids, such as nitric acid, sulfuric acid, and/or phosphoric acid. According to the present invention, the pH of the sealing composition may be maintained through the inclusion of a basic material, including water soluble and/or water dispersible bases, including carbonates such as Group I carbonates, Group II carbonates, hydroxides such as sodium hydroxide, potassium hydroxide, or ammonium hydroxide, ammonia, and/or amines such as triethylamine, methylethyl amine, or mixtures thereof.

As mentioned above, the sealing composition may comprise a carrier, often an aqueous medium, so that the composition is in the form of a solution or dispersion of the lithium cation in the carrier. According to the present invention, the solution or dispersion may be brought into contact with the substrate by any of a variety of known techniques, such as dipping or immersion, spraying, intermittent spraying, dipping followed by spraying, spraying followed by dipping, brushing, or roll-coating. According to the invention, the solution or dispersion when applied to the metal substrate may be at a temperature ranging from 4°C to about 71°C (40 °F to about 160°F) such as 16 °C to 43 °C (60 °F to 110 °F). For example, the process of contacting the metal substrate with the sealing composition may be carried out at ambient or room temperature. The contact time is often from about 1 second to about 15 minutes, such as about 5 seconds to about 2 minutes.

According to the present invention, following the contacting with the sealing composition, the substrate optionally may be air dried at room temperature or may be dried with hot air, for example, by using an air knife, by flashing off the water by brief exposure of the substrate to a high temperature, such as by drying the substrate in an oven at 15°C to 100°C, such as 20 °C to 90 °C, or in a heater assembly using, for example, infrared heat, such as for 10 minutes at 70°C, or by passing the substrate between squeegee rolls. According to the present invention, the substrate surface may be partially, or in some instances, completely dried prior to any subsequent contact of the substrate surface with any water, solutions, compositions, or the like. As used herein with respect to a substrate surface, "completely dry" or "completely dried" means there is no moisture on the substrate surface visible to the human eye.

Optionally, according to the present invention, following the contacting with the sealing composition, the substrate optionally is not rinsed or contacted with any aqueous solutions prior to contacting at least a portion of the substrate surface with subsequent treatment compositions to form films, layers, and/or coatings thereon (described below).

Optionally, according to the present invention, following the contacting with the sealing composition, the substrate optionally may be contacted with tap water, deionized water, RO water and/or any aqueous solution known to those of skill in the art of substrate treatment, wherein such water or aqueous solution may be at a temperature of room temperature (16 °C(60 °F)) to 43°C (110°F) The substrate then optionally may be dried, for example air dried or dried with hot air as described in the preceding paragraph such that the substrate surface may be partially, or in some instances, completely dried prior to any subsequent contact of the substrate surface with any water, solutions, compositions, or the like.

According to the present invention, the thickness of the layer formed by the treatment composition may for instance be up to 550 nm, such as 5 nm to 550 nm, such as 10 nm to 400 nm, such as 25 nm to 250 nm. Thickness of layer formed from the treatment composition can be determined using a handful of analytical techniques including, but not limited to XPS (x-ray photoelectron spectroscopy) depth profiling or TEM (transmission electron microscopy).
As used herein, "thickness," when used with respect to a layer formed by the treatment composition of the present invention, refers to either (a) a layer formed above the original air/substrate interface, (b) a modified layer formed below the pretreatment/substrate interface, or (c) a combination of (a) and (b), as illustrated in Fig. 1. Although modified layer (b) is shown extending to the pretreatment/substrate interface in Fig. 1, an intervening layer may be present between the modified layer (b) and the pretreatment/substrate interface. Likewise, (c), a combination of (a) and (b), is not limited to a continuous layer and may include multiple layers with intervening layers therebetween, and the measurement of the thickness of layer (c) may exclude the intervening layers.

According to the present invention, the substrate having the layer formed from the sealing composition may have at least a 50% reduction in the number of pits on the substrate surface compared to a substrate that does not have a layer formed from the sealing composition thereon following 3 day exposure in neutral salt spray cabinet operated according to ASTM B117.

Additionally, according to the present invention, the substrate having the layer formed from the sealing composition may have at least a 50% reduction in the number of pits on the substrate surface compared to a substrate that does not have a layer formed from the sealing composition thereon following 7 day exposure in neutral salt spray cabinet operated according to ASTM B117.

According to the present invention, at least a portion of the substrate surface may be cleaned and/or deoxidized prior to contacting at least a portion of the substrate surface with a sealing composition described above, in order to remove grease, dirt, and/or other extraneous matter. At least a portion of the surface of the substrate may be cleaned by physical and/or chemical means, such as mechanically abrading the surface and/or cleaning/degreasing the surface with commercially available alkaline or acidic cleaning agents that are well known to those skilled in the art. Examples of alkaline cleaners suitable for use in the present invention include Chemkleen^{™} 166HP, 166M/C, 177, 490MX, 2010LP, and Surface Prep 1 (SP1), Ultrax 32, Ultrax 97, Ultrax 29, and Ultrax92D, each of which are commercially available from PPG Industries, Inc. (Cleveland, OH), and any of the DFM Series, RECC 1001, and 88X1002 cleaners commercially available from PRC-DeSoto International, Sylmar, CA), and Turco 4215-NCLT and Ridolene (commercially available from Henkel Technologies, Madison Heights, MI). Such cleaners are often preceded or followed by a water rinse, such as with tap water, distilled water, or combinations thereof.

As mentioned above, according to the present invention, at least a portion of the cleaned substrate surface may be deoxidized, mechanically and/or chemically. As used herein, the term "deoxidize" means removal of the oxide layer found on the surface of the substrate in order to promote uniform deposition of the conversion composition (described below), as well as to promote the adhesion of the conversion composition coating to the substrate surface. Suitable deoxidizers will be familiar to those skilled in the art. A typical mechanical deoxidizer may be uniform roughening of the substrate surface, such as by using a scouring or cleaning pad. Typical chemical deoxidizers include, for example, acid-based deoxidizers such as phosphoric acid, nitric acid, fluoroboric acid, sulfuric acid, chromic acid, hydrofluoric acid, and ammonium bifluoride, or Amchem 7/17 deoxidizers (available from Henkel Technologies, Madison Heights, MI), OAKITE DEOXIDIZER LNC (commercially available from Chemetall), TURCO DEOXIDIZER 6 (commercially available from Henkel), or combinations thereof. Often, the chemical deoxidizer comprises a carrier, often an aqueous medium, so that the deoxidizer may be in the form of a solution or dispersion in the carrier, in which case the solution or dispersion may be brought into contact with the substrate by any of a variety of known techniques, such as dipping or immersion, spraying, intermittent spraying, dipping followed by spraying, spraying followed by dipping, brushing, or roll-coating. According to the present invention, the skilled artisan will select a temperature range of the solution or dispersion, when applied to the metal substrate, based on etch rates, for example, at a temperature ranging from 50°F to 150°F (10°C to 66°C), such as from 70°F to 130°F (21°C to 54°C), such as from 80°F to 120°F (27°C to 49°C). The contact time may be from 30 seconds to 20 minutes, such as 1 minute to 15 minutes, such as 90 seconds to 12 minutes, such as 3 minutes to 9 minutes.

Following the cleaning and/or deoxidizing step(s), the substrate optionally may be rinsed with tap water, deionized water, and/or an aqueous solution of rinsing agents in order to remove any residue. According to the present invention, the wet substrate surface may be treated with a conversion composition (described below) and/or a sealing composition (described above), or the substrate may be dried prior to treating the substrate surface, such as air dried, for example, by using an air knife, by flashing off the water by brief exposure of the substrate to a high temperature, such as 15°C to 100°C, such as 20 °C to 90 °C, or in a heater assembly using, for example, infrared heat, such as for 10 minutes at 70°C, or by passing the substrate between squeegee rolls.

As mentioned above, at least a portion of the substrate surface optionally may be contacted with a conversion composition prior to or after being contacted with the sealing composition described above. The conversion composition may be spontaneously depositable or electrodepositable. As used herein, "spontaneously depositable," when used with respect to the conversion composition, refers to a composition that is capable of reacting with and chemically altering the substrate surface and binding to it to form a protective layer in the absence of an externally applied voltage. As used herein, an "electrodepositable," when used with respect to the conversion composition, refers to a composition containing a non-elemental metal, i.e. a metal-containing compound, complex, ion or the like wherein the metal is not in elemental form, that is capable of reacting with and chemically altering the substrate surface and binding to it to form a protective layer upon the introduction of an externally applied voltage. Such an electrodepositable conversion composition may be applied using any methods or parameters known to those skilled in the art.

According to the present invention, the conversion composition may comprise a lanthanide series element cation, a Group IIIB metal cation and/or a Group IVB metal cation. The conversion composition also may further comprise an ion of a Group IIA metal, a Group VB metal, a Group VIB metal, a Group VIIB metal, and/or a Group XII metal (together with the lanthanide series cation, the Group IIIB metal cation, and/or the Group IVB metal cation, referred to collectively herein as "conversion composition metal cations").

According to the present invention, the salts of the conversion composition metal cations may be present in the conversion composition in an amount of at least 5 ppm, such as at least 50 ppm, such as at least 100 ppm, (calculated as metal salt) based on total weight of the conversion composition, and in some instances, may be present in an amount of no more than 25000 ppm, such as no more than 9000 ppm, such as no more than 1500 (calculated as metal salt) based on total weight of the conversion composition. According to the present invention, the salt of the conversion composition metal cations may be present in the conversion composition in an amount of 5 ppm to 25000 ppm (calculated as metal salt) based on total weight of the conversion composition, such as 50 ppm to 9000 ppm, such as 100 ppm to 1500 ppm.

According to the present invention, the conversion composition metal cation may be present in the conversion composition in an amount of at least 5 ppm, such as at least 150 ppm, such as at least 300 ppm, (calculated as metal cation) based on total weight of the conversion composition, and in some instances may be present in the conversion composition in an amount of no more than 25,000 ppm, such as no more than 12,500 ppm, such as no more than 10,000 ppm, (calculated as metal cation) based on total weight of the conversion composition. According to the present invention, the conversion composition metal cation may be present in the conversion composition in an amount of 5 ppm to 25,000 ppm, such as 150 ppm to 12,500 ppm, such as 300 ppm to 10,000 ppm, (calculated as metal cation) based on total weight of the conversion composition.

According to the present invention, the lanthanide series element cation may, for example, comprise cerium, praseodymium, terbium, or combinations thereof; the Group IIA metal cation may comprise magnesium; the Group IIIB metal cation may comprise yttrium, scandium, or combinations thereof; the Group IVB metal cation may comprise zirconium, titanium, hafnium, or combinations thereof; the Group VB metal cation may comprise vanadium; the Group VIB metal may comprise molybdenum; the Group VIIB metal cation may comprise trivalent or hexavalent chromium or manganese; and the Group XII metal cation may comprise zinc.

For example, the Group IIIB metal and/or Group IVB metal cation used in the conversion composition may be a compound of zirconium, titanium, hafnium, yttrium, scandium, or a mixture thereof. Suitable compounds of zirconium include, but are not limited to, hexafluorozirconic acid, alkali metal and ammonium salts thereof, ammonium zirconium carbonate, zirconyl nitrate, zirconyl sulfate, zirconium carboxylates and zirconium hydroxy carboxylates, such as zirconium acetate, zirconium oxalate, ammonium zirconium glycolate, ammonium zirconium lactate, ammonium zirconium citrate, and mixtures thereof. Suitable compounds of titanium include, but are not limited to, fluorotitanic acid and its salts. A suitable compound of hafnium includes, but is not limited to, hafnium nitrate. Suitable compounds of yttrium include, but are not limited to, yttrium halides.

According to the present invention, the Group IIIB metal cation and/or the Group IVB metal cation may be present in the conversion composition in a total amount of at least 20 ppm metal (calculated as metal cation), based on total weight of the conversion composition, such as at least 50 ppm metal, or, in some cases, at least 70 ppm metal. According to the present invention, the Group IIIB metal cation and/or the Group IVB metal cation may be present in the conversion composition in a total amount of no more than 1000 ppm metal (calculated as metal cation), based on total weight of the conversion composition, such as no more than 600 ppm metal, or, in some cases, no more than 300 ppm metal. According to the present invention, the Group IIIB metal cation and/or the Group IVB metal cation may be present in the conversion composition in a total amount of 20 ppm metal to 1000 ppm metal (calculated as metal cation), based on total weight of the conversion composition, such as from 50 ppm metal to 600 ppm metal, such as from 70 ppm metal to 300 ppm metal. As used herein, the term "total amount," when used with respect to the amount of Group IIIB metal cation and/or Group IVB metal cation, means the sum of all Group IIIB and/or Group IV metal cations present in the conversion composition.

According to the present invention, the salts of the conversion composition metal cations may be present in the conversion composition in an amount of at least 5 ppm, such as at least 50 ppm, such as at least 100 ppm, (calculated as metal salt) based on total weight of the conversion composition, and in some instances, may be present in an amount of no more than 25000 ppm, such as no more than 9000 ppm, such as no more than 1500 (calculated as total metal salt) based on total weight of the conversion composition. According to the present invention, the salt of the conversion composition metal cations may be present in the conversion composition in an amount of 5 ppm to 25000 ppm, such as 50 ppm to 9000 ppm, such as 100 ppm to 1500 ppm.

According to the present invention, the conversion composition metal cation may be present in the conversion composition in an amount of at least 5 ppm, such as at least 150 ppm, such as at least 300 ppm, (calculated as metal cation) based on total weight of the conversion composition, and in some instances may be present in the conversion composition in an amount of no more than 25,000 ppm, such as no more than 12,500 ppm, such as no more than 10,000 ppm, (calculated as metal cation) based on total weight of the conversion composition. According to the present invention, the conversion composition metal cation may be present in the conversion composition in an amount of 5 ppm to 25,000 ppm, such as 150 ppm to 12,500 ppm, such as 300 ppm to 10,000 ppm (calculated as metal cation) based on total weight of the conversion composition.

According to the present invention, the conversion composition also may comprise an electropositive metal ion. As used herein, the term "electropositive metal ion" refers to metal ions that will be reduced by the metal substrate being treated when the conversion solution contacts the surface of the metallic substrate. As will be appreciated by one skilled in the art, the tendency of chemical species to be reduced is called the reduction potential, is expressed in volts, and is measured relative to the standard hydrogen electrode, which is arbitrarily assigned a reduction potential of zero. The reduction potential for several elements is set forth in Table 2 below (according to the CRC 82^{nd} Edition, 2001-2002). An element or ion is more easily reduced than another element or ion if it has a voltage value, E*, in the following table, that is more positive than the elements or ions to which it is being compared.

**TABLE 2**

| Element | Reduction half-cell reaction | Voltage, E* |
|---|---|---|
| Potassium | K⁺ + e → K | -2.93 |
| Calcium | Ca²⁺ + 2e → Ca | -2.87 |
| Sodium | Na⁺ + e → Na | -2.71 |
| Magnesium | Mg²⁺ + 2e → Mg | -2.37 |
| Aluminum | Al³⁺ + 3e → Al | -1.66 |
| Zinc | Zn²⁺ + 2e → Zn | -0.76 |
| Iron | Fe²⁺ + 2e → Fe | -0.45 |
| Nickel | Ni²⁺ + 2e → Ni | -0.26 |
| Tin | Sn²⁺ + 2e → Sn | -0.14 |
| Lead | Pb²⁺ + 2e → Pb | -0.13 |
| Hydrogen | 2H⁺ + 2e → H₂ | -0.00 |
| Copper | Cu²⁺ + 2e → Cu | 0.34 |
| Mercury | Hg2²⁺ + 2e → 2Hg | 0.80 |
| Silver | Ag⁺ + e → Ag | 0.80 |
| Gold | Au³⁺ + 3e → Au | 1.50 |

Thus, as will be apparent, when the metal substrate comprises one of the materials listed earlier, such as cold rolled steel, hot rolled steel, steel coated with zinc metal, zinc compounds, or zinc alloys, hot-dipped galvanized steel, galvanealed steel, steel plated with zinc alloy, aluminum alloys, aluminum plated steel, aluminum alloy plated steel, magnesium and magnesium alloys, suitable electropositive metals for deposition thereon include, for example, nickel, copper, silver, and gold, as well mixtures thereof.

According to the present invention, when the electropositive metal comprises copper, both soluble and insoluble compounds may serve as a source of copper ions in the conversion compositions. For example, the supplying source of copper ions in the conversion composition may be a water soluble copper compound. Specific examples of such compounds include, but are not limited to, copper cyanide, copper potassium cyanide, copper sulfate, copper nitrate, copper pyrophosphate, copper thiocyanate, disodium copper ethylenediaminetetraacetate tetrahydrate, copper bromide, copper oxide, copper hydroxide, copper chloride, copper fluoride, copper gluconate, copper citrate, copper lauroyl sarcosinate, copper formate, copper acetate, copper propionate, copper butyrate, copper lactate, copper oxalate, copper phytate, copper tartrate, copper malate, copper succinate, copper malonate, copper maleate, copper benzoate, copper salicylate, copper aspartate, copper glutamate, copper fumarate, copper glycerophosphate, sodium copper chlorophyllin, copper fluorosilicate, copper fluoroborate and copper iodate, as well as copper salts of carboxylic acids in the homologous series formic acid to decanoic acid, copper salts of polybasic acids in the series oxalic acid to suberic acid, and copper salts of hydroxycarboxylic acids, including glycolic, lactic, tartaric, malic and citric acids.

When copper ions supplied from such a water-soluble copper compound are precipitated as an impurity in the form of copper sulfate, copper oxide, etc., it may be desirable to add a complexing agent that suppresses the precipitation of copper ions, thus stabilizing them as a copper complex in the composition.

According to the present invention, the copper compound may be added as a copper complex salt such as K₃Cu(CN)₄ or Cu-EDTA, which can be present stably in the conversion composition on its own, but it is also possible to form a copper complex that can be present stably in the conversion composition by combining a complexing agent with a compound that is difficult to solubilize on its own. Examples thereof include a copper cyanide complex formed by a combination of CuCN and KCN or a combination of CuSCN and KSCN or KCN, and a Cu-EDTA complex formed by a combination of CuSO₄ and EDTA•2Na.

With regard to the complexing agent, a compound that can form a complex with copper ions can be used; examples thereof include inorganic compounds such as cyanide compounds and thiocyanate compounds, and polycarboxylic acids, and specific examples thereof include ethylenediaminetetraacetic acid, salts of ethylenediaminetetraacetic acid such as dihydrogen disodium ethylenediaminetetraacetate dihydrate, aminocarboxylic acids such as nitrilotriacetic acid and iminodiacetic acid, oxycarboxylic acids such as citric acid and tartaric acid, succinic acid, oxalic acid, ethylenediaminetetramethylenephosphonic acid, and glycine, and organophosphonates such as 1-hydroxethylidene-1,1-diphosphonic acid (commercially available from Italmatch Chemicals as Dequest 2010).

According to the present invention, the electropositive metal ion may be present in the conversion composition in an amount of at least 2 ppm (calculated as metal ion) based on the total weight of the conversion composition, such as at least 4 ppm, such as at least 6 ppm, such as at least 8 ppm, such as at least 10 ppm. According to the present invention, the electropositive metal ion may be present in the conversion composition in an amount of no more than 100 ppm (calculated as metal ion) based on the total weight of the conversion composition, such as no more than 80 ppm, such as no more than 60 ppm, such as no more than 40 ppm, such as no more than 20 ppm. According to the present invention, the electropositive metal ion may be present in the conversion composition in an amount of from 2 ppm to 100 ppm (calculated as metal ion) based on the total weight of the conversion composition, such as from 4 ppm to 80 ppm, such as from 6 ppm to 60 ppm, such as from 8 ppm to 40 ppm, such as from 10 ppm to 20 ppm. The amount of electropositive metal ion in the conversion composition can range between the recited values inclusive of the recited values.

According to the present invention, a source of fluoride may be present in the conversion composition. As used herein the amount of fluoride disclosed or reported in the conversion composition is referred to as "free fluoride," as measured in part per millions of fluoride. Free fluoride is defined above as being able to be measured by a fluoride-selective ISE. In addition to free fluoride, a conversion may also contain "bound fluoride, which is described above. The sum of the concentrations of the bound and free fluoride equal the total fluoride, which can be determined as described above. The total fluoride in the conversion composition can be supplied by hydrofluoric acid, as well as alkali metal and ammonium fluorides or hydrogen fluorides. Additionally, total fluoride in the conversion composition may be derived from Group IVB metals present in the conversion composition, including, for example, hexafluorozirconic acid or hexafluorotitanic acid. Other complex fluorides, such as H₂SiF₆ or HBF₄, can be added to the conversion composition to supply total fluoride. The skilled artisan will understand that the presence of free fluoride in the conversion bath can impact conversion deposition and etching of the substrate, hence it is critical to measure this bath parameter. The levels of free fluoride will depend on the pH and the addition of chelators into the conversion bath and indicates the degree of fluoride association with the metal ions/protons present in the conversion bath. For example, conversion compositions of identical total fluoride levels can have different free fluoride levels which will be influenced by the pH and chelators present in the conversion solution.

According to the present invention, the total fluoride of the conversion composition may be present in an amount of at least 25 ppm, based on a total weight of the conversion composition, such as at least 100 ppm fluoride, such as at least 200 ppm fluoride. According to the present invention, the total fluoride of the conversion composition may be present in an amount of no more than 5000 ppm, based on a total weight of the conversion composition, such as no more than 2000 ppm fluoride, such as no more than 1000 ppm fluoride. According to the present invention, the total fluoride of the conversion composition may be present in an amount of 10 ppm fluoride to 5000 ppm fluoride, based on a total weight of the conversion composition, such as 100 ppm fluoride to 2000 ppm, such as no more than 200 ppm fluoride to 1000 ppm fluoride.

According to the present invention, the free fluoride of the conversion composition may be present in an amount of at least 15 ppm, based on a total weight of the conversion composition, such as at least 50 ppm free fluoride, such as at least 100 ppm free fluoride, such as at least 200 ppm free fluoride. According to the present invention, the free fluoride of the conversion composition may be present in an amount of no more than 2500 ppm, based on a total weight of the conversion composition, such as no more than 1000 ppm free fluoride, such as no more than 500 ppm free fluoride, such as no more than 250 ppm free fluoride. According to the present invention, the free fluoride of the conversion composition may be present in an amount of 15 ppm free fluoride to 2500 ppm free fluoride, based on a total weight of the conversion composition, such as 50 ppm fluoride to 1000 ppm, such as no more than 200 ppm free fluoride to 500 ppm free fluoride, such as no more than 100 ppm free fluoride to 250 ppm free fluoride.

According to the present invention, the conversion composition also may comprise a lithium cation. According to the invention, the conversion composition may further comprise an anion that may be suitable for forming a salt with the lithium cation. Non-limiting examples of suitable lithium salts include lithium nitrate, lithium sulfate, lithium fluoride, lithium chloride, lithium hydroxide, lithium carbonate, lithium iodide, and combinations thereof.

According to the present invention, the lithium cation may be present in the conversion composition in an amount of at least 2 ppm (as lithium cation) based on a total weight of the conversion composition, such as at least 5 ppm, such as at least 25 ppm, such as at least 75 ppm, and in some instances, may be present in amount of no more than 500 ppm, based on a total weight of the conversion composition, such as no more than 250 ppm, such as no more than 125 ppm, such as no more than 100 ppm. According to the present invention, the lithium cation may be present in the conversion composition in an amount of 2 ppm to 500 ppm (as lithium cation) based on a total weight of the conversion composition, such as 5 ppm to 250 ppm, such as 25 ppm to 125 ppm, such as 75 ppm to 100 ppm. The amount of lithium cation in the conversion composition can range between the recited values inclusive of the recited values.

According to the present invention, the conversion composition may also comprise a molybdenum cation. According to the invention, the conversion composition may further comprise an anion that may be suitable for forming a salt with the molybdenum cation. Non-limiting examples of suitable molybdenum salts include sodium molybdate, calcium molybdate, potassium molybdate, ammonium molybdate, molybdenum chloride, molybdenum acetate, molybdenum sulfamate, molybdenum formate, molybdenum lactate, and combinations thereof.

According to the present invention, molybdenum cation may be present in the conversion composition in an amount of at least 5 ppm (as molybdenum cation) based on a total weight of the conversion composition, such as at least 25 ppm, such as 100 ppm, and in some instances, may be present in the conversion composition in an amount of no more than 500 ppm, based on total weight of the conversion composition, such as no more than 250 ppm, such as no more than 150 ppm. According to the present invention, molybdenum may be present in the conversion composition in an amount of 5 ppm to 500 ppm (as molybdenum cation) based on total weight of the conversion composition, such as 25 ppm to 250 ppm, such as 100 ppm to 150 ppm. The amount of molybdenum in the conversion composition can range between the recited values inclusive of the recited values.

According to the present invention, the conversion composition may further comprise an anion that may be suitable for forming a salt with the conversion composition metal cations, such as a halogen, a nitrate, a sulfate, a phosphate, a silicate (orthosilicates and metasilicates), carbonates, hydroxides, and the like. According to the present invention, the conversion composition metal salt may be present in the conversion composition in an amount of at least 50 ppm (calculated as metal salt) based on total weight of the conversion composition, such as at least 1000 ppm, and in some instances, may be present in an amount of no more than 30,000 ppm, such as no more than 2000 ppm. According to the present invention, the conversion composition metal salt may be present in an amount of 50 ppm to 30,000 ppm, such as 1000 ppm to 2000 ppm (calculated as metal salt) based on total weight of the conversion composition.

According to the present invention, the halogen may be present in the conversion composition, if at all, in an amount of at least 5 ppm (calculated as anion) based on total weight of the conversion composition, such as at least 50 ppm, such as at least 150 ppm, such as at least 500 ppm, and may be present in an amount of no more than 25,000 ppm (calculated as anion) based on total weight of the conversion composition, such as no more than 18,500 ppm, such as no more than 4000 ppm, such as no more than 2000 ppm,. According to the present invention, the halogen may be present in the conversion composition, if at all, in an amount of 5 ppm to 25,000 ppm(calculated as anion) based on total weight of the conversion composition, such as 50 ppm to 18,500 ppm, such as 150 ppm to 4000, such as 500 ppm to 2000 ppm.

According to the present invention, the nitrate may be present in the conversion composition, if at all, in an amount of at least 2 ppm (calculated as anion) based on total weight of the conversion composition, such as at least 50 ppm, such as at least 250 ppm, and may be present in an amount of no more than 10,000 ppm (calculated as anion) based on total weight of the conversion composition, such as no more than 5000 ppm, such as no more than 2500 ppm,. According to the present invention, the halogen may be present in the conversion composition, if at all, in an amount of 2 ppm to 10,000 ppm (calculated as anion) based on total weight of the conversion composition, such as 50 ppm to 5000 ppm, such as 250 ppm to 2500 ppm.

According to the present invention, the conversion composition may, in some instances, comprise an oxidizing agent. Non-limiting examples of the oxidizing agent include peroxides, persulfates, perchlorates, hypochlorite, nitric acid, sparged oxygen, bromates, peroxi-benzoates, ozone, or combinations thereof.

According to the present invention, the oxidizing agent may be present, if at all, in an amount of at least 100 ppm, such as at least 500 ppm, based on total weight of the conversion composition, and in some instances, may be present in an amount of no more than 13,000 ppm, such as no more than 3000 ppm, based on total weight of the conversion composition. In some instances, the oxidizing agent may be present in the conversion composition, if at all, in an amount of 100 ppm to 13,000 ppm, such as 500 ppm to 3000 ppm, based on total weight of the conversion composition.

According to the present invention, the conversion composition may exclude chromium or chromium-containing compounds. As used herein, the term "chromium-containing compound" refers to materials that include hexavalent chromium. Non-limiting examples of such materials include chromic acid, chromium trioxide, chromic acid anhydride, dichromate salts, such as ammonium dichromate, sodium dichromate, potassium dichromate, and calcium, barium, magnesium, zinc, cadmium, and strontium dichromate. When a conversion composition and/or a coating or a layer, respectively, formed from the same is substantially free, essentially free, or completely free of chromium, this includes chromium in any form, such as, but not limited to, the hexavalent chromium-containing compounds listed above.

Thus, optionally, according to the present invention, the present conversion compositions and/or coatings or layers, respectively, deposited from the same may be substantially free, may be essentially free, and/or may be completely free of one or more of any of the elements or compounds listed in the preceding paragraph. A conversion composition and/or coating or layer, respectively, formed from the same that is substantially free of chromium or derivatives thereof means that chromium or derivatives thereof are not intentionally added, but may be present in trace amounts, such as because of impurities or unavoidable contamination from the environment. In other words, the amount of material is so small that it does not affect the properties of the conversion composition; in the case of chromium, this may further include that the element or compounds thereof are not present in the conversion compositions and/or coatings or layers, respectively, formed from the same in such a level that it causes a burden on the environment. The term "substantially free" means that the conversion compositions and/or coating or layers, respectively, formed from the same contain less than 10 ppm of any or all of the elements or compounds listed in the preceding paragraph, based on total weight of the composition or the layer, respectively, if any at all. The term "essentially free" means that the conversion compositions and/or coatings or layers, respectively, formed from the same contain less than 1 ppm of any or all of the elements or compounds listed in the preceding paragraph, if any at all. The term "completely free" means that the conversion compositions and/or coatings or layers, respectively, formed from the same contain less than 1 ppb of any or all of the elements or compounds listed in the preceding paragraph, if any at all.

According to the present invention, the conversion composition may, in some instances, exclude phosphate ions or phosphate-containing compounds and/or the formation of sludge, such as aluminum phosphate, iron phosphate, and/or zinc phosphate, formed in the case of using a treating agent based on zinc phosphate. As used herein, "phosphate-containing compounds" include compounds containing the element phosphorous such as ortho phosphate, pyrophosphate, metaphosphate, tripolyphosphate, organophosphonates, and the like, and can include, but are not limited to, monovalent, divalent, or trivalent cations such as: sodium, potassium, calcium, zinc, nickel, manganese, aluminum and/or iron. When a composition and/or a layer or coating comprising the same is substantially free, essentially free, or completely free of phosphate, this includes phosphate ions or compounds containing phosphate in any form.

Thus, according to the present invention, conversion composition and/or layers deposited from the same may be substantially free, or in some cases may be essentially free, or in some cases may be completely free, of one or more of any of the ions or compounds listed in the preceding paragraph. A conversion composition and/or layers deposited from the same that is substantially free of phosphate means that phosphate ions or compounds containing phosphate are not intentionally added, but may be present in trace amounts, such as because of impurities or unavoidable contamination from the environment. In other words, the amount of material is so small that it does not affect the properties of the composition; this may further include that phosphate is not present in the conversion compositions and/or layers deposited from the same in such a level that they cause a burden on the environment. The term "substantially free" means that the conversion compositions and/or layers deposited from the same contain less than 5 ppm of any or all of the phosphate anions or compounds listed in the preceding paragraph, based on total weight of the composition or the layer, respectively, if any at all. The term "essentially free" means that the conversion compositions and/or layers comprising the same contain less than 1 ppm of any or all of the phosphate anions or compounds listed in the preceding paragraph. The term "completely free" means that the conversion compositions and/or layers comprising the same contain less than 1 ppb of any or all of the phosphate anions or compounds listed in the preceding paragraph, if any at all.

According to the present invention, the pH of the conversion composition may be 1.0 to 4.5, such as 3 to 4, and may be adjusted using, for example, any acid and/or base as is necessary. According to the present invention, the pH of the conversion composition may be maintained through the inclusion of an acidic material, including water soluble and/or water dispersible acids, such as nitric acid, sulfuric acid, and/or phosphoric acid. According to the present invention, the pH of the composition may be maintained through the inclusion of a basic material, including water soluble and/or water dispersible bases, such as sodium hydroxide, sodium carbonate, potassium hydroxide, ammonium hydroxide, ammonia, and/or amines such as triethylamine, methylethyl amine, or mixtures thereof.

The conversion composition may comprise an aqueous medium and may optionally contain other materials such as nonionic surfactants and auxiliaries conventionally used in the art of conversion compositions. In the aqueous medium, water dispersible organic solvents, for example, alcohols with up to about 8 carbon atoms such as methanol, isopropanol, and the like, may be present; or glycol ethers such as the monoalkyl ethers of ethylene glycol, diethylene glycol, or propylene glycol, and the like. When present, water dispersible organic solvents are typically used in amounts up to about ten percent by volume, based on the total volume of aqueous medium.

Other optional materials include surfactants that function as defoamers or substrate wetting agents. Anionic, cationic, amphoteric, and/or nonionic surfactants may be used. Defoaming surfactants may optionally be present at levels up to 1 weight percent, such as up to 0.1 percent by weight, and wetting agents are typically present at levels up to 2 percent, such as up to 0.5 percent by weight, based on the total weight of the conversion composition.

Optionally, according to the present invention, the conversion composition and/or films deposited or formed therefrom may further comprise silicon in amounts of at least 10 ppm, based on total weight of the conversion composition, such as at least 20 ppm, such as at least 50 ppm. According to the present invention, the conversion composition and/or films deposited or formed therefrom may comprise silicon in amounts of less than 500 ppm, based on total weight of the conversion composition, such as less than 250 ppm, such as less than 100 ppm. According to the present invention, the conversion composition and/or films deposited or formed therefrom may comprise silicon in amounts of 10 ppm to 500 ppm, based on total weight of the conversion composition, such as 20 ppm to 250 ppm, such as 50 ppm to 100 ppm. Alternatively, the conversion composition of the present invention and/or films deposited or formed therefrom may be substantially free, or, in some cases, completely free of silicon.

The conversion composition may comprise a carrier, often an aqueous medium, so that the composition is in the form of a solution or dispersion of the lanthanide and/or Group IIIB metal in the carrier. In these embodiments, the solution or dispersion may be brought into contact with the substrate by any of a variety of known techniques, such as dipping or immersion, spraying, intermittent spraying, dipping followed by spraying, spraying followed by dipping, brushing, or roll-coating. According to the invention, the solution or dispersion when applied to the metal substrate is at a temperature ranging from 4 °C to 71 °C (40 °F to 160 °F), such as 16 °C to 43 °C (60 °F to 110 °F), such as 21 °C to 32 °C (70 °F to 90 °F). For example, the conversion process may be carried out at ambient or room temperature. The contact time is often from 30 seconds to 15 minutes, such as 4 minutes to 10 minutes.

According to the present invention, following the contacting with the conversion composition, the substrate optionally may be air dried at room temperature or may be dried with hot air, for example, by using an air knife, by flashing off the water by brief exposure of the substrate to a high temperature, such as by drying the substrate in an oven at 15°C to 100°C, such as 20 °C to 90 °C, or in a heater assembly using, for example, infrared heat, such as for 10 minutes at 70°C, or by passing the substrate between squeegee rolls. According to the present invention, following the contacting with the conversion composition, the substrate optionally may be rinsed with tap water, deionized water, and/or an aqueous solution of rinsing agents in order to remove any residue and then optionally may be dried, for example air dried or dried with hot air as described in the preceding sentence.

According to the present invention, the level of the lanthanide, Group IIIB metal, and/or Group IVB metal in the film formed on the substrate surface from the conversion composition is at least 100 counts greater than on a surface of a substrate that does not have the film thereon as measured by X-ray fluorescence (measured using X-Met 7500, Oxford Instruments; operating parameters 60 second timed assay, 15Kv, 45µA, filter 3, T(p) = 1.5µs for lanthanides, Group IIIB metals, and Group IVB metals except zirconium; operating parameters 60 second timed assay, 40Kv, 10µA, filter 4, T(p) = 1.5µs for zirconium).

According to the present invention, the substrate having been contacted with the conversion composition and having the layer formed from the sealing composition has at least a 50% reduction in the number of pits on the substrate surface compared to a substrate having the film formed from the conversion composition or the layer formed from the sealing composition but not the film and the seal following 3 day exposure in neutral salt spray cabinet operated according to ASTM B117.

According to the present invention, the substrate having the film formed from the conversion composition and the layer formed from the sealing composition has at least a 50% reduction in the number of pits on the substrate surface compared to a substrate having the film formed from the conversion composition or the layer formed from the sealing composition but not the film and the seal following 3 day exposure in neutral salt spray cabinet operated according to ASTM B117.

According to the present invention, disclosed herein is a substrate comprising, or in some instances consisting essentially of, or in some instances consisting of, a layer having a thickness of 25 nm to 250 nm formed from a sealing composition comprising, or in some instances consisting essentially of, or in some instances, consisting of, a lithium source. According to the present invention, the substrate may comprise an aluminum alloy comprising copper in an amount of 1 per cent by weight to 10 percent by weight.

According to the present invention, disclosed herein is a substrate comprising, or in some instances consisting essentially of, or in some instances consisting of: a film formed from a conversion composition comprising, or in some cases consisting essentially of, or in some instances consisting of, a lanthanide, a Group IIIB metal, a Group IVB metal, or combinations thereof, wherein the level of the lanthanide, Group IIIB metal, and/or Group IVB metal in the film is at least 100 counts greater than on a surface of a substrate that does not have the film thereon as measured by X-ray fluorescence (measured using X-Met 7500, Oxford Instruments; operating parameters 60 second timed assay, 15Kv, 45µA, filter 3, T(p) = 1.5µs for lanthanides, Group IIIB metals, and Group IVB metals except zirconium; operating parameters 60 second timed assay, 40Kv, 10µA, filter 4, T(p) = 1.5µs for zirconium); and a layer formed from a sealing composition comprising, or in some instances consisting essentially of, or in some instances consisting of, a lithium source.

According to the present invention, disclosed herein is a method of treating a substrate comprising, or in some instances consisting essentially of, or in some instances consisting of, contacting at least a portion of the substrate surface with a sealing composition comprising, or in some instances consisting essentially of, or in some instances, consisting of, a lithium source. According to the present invention, the substrate may comprise an aluminum alloy comprising copper in an amount of 1 per cent by weight to 10 percent by weight.

According to the present invention, disclosed herein is a method of treating a substrate, comprising, or in some instances consisting essentially of, or in some instances consisting of, (a) contacting at least a portion of the substrate surface with a conversion composition comprising, or in some instances consisting essentially of, or in some instances consisting of, a lanthanide, a Group IIIB metal, a Group IVB metal, or combinations thereof; and (b) contacting at least a portion of the substrate surface contacted with the conversion composition with a sealing composition comprising, or in some instances consisting essentially of, or in some instances consisting of, a lithium source.

It has been surprisingly discovered that the combination contacting a substrate surface with a lanthanide-containing conversion composition and a lithium-containing sealing composition that includes either Group VB salt or a Group VIB salt further reduced the level of pitting on the substrate surface following 3 day exposure in neutral salt spray cabinet operated according to ASTM B117 compared to a substrate surface that has been contacted with the conversion composition and a sealing composition that does not include the Group VB salt or Group VIB salt. These results were unexpected.

It also has been surprisingly discovered that the combination of a film formed from a lanthanide-containing conversion composition with a layer formed from a lithium-containing sealing composition results in at least a 50% reduction in the number of pits on the substrate surface compared to a substrate surface that has the conversion composition film or the sealing composition layer but not both following 7 day exposure in neutral salt spray cabinet operated according to ASTM B117. These results were unexpected.

Notably, on sanded substrates, corrosion performance was markedly improved on when such sanded substrates were treated according to the system and method of the present invention.

According to the present invention, after the substrate is contacted with the sealing composition, a coating composition comprising a film-forming resin may be deposited onto at least a portion of the surface of the substrate that has been contacted with the sealing composition. Any suitable technique may be used to deposit such a coating composition onto the substrate, including, for example, brushing, dipping, flow coating, spraying and the like. In some instances, however, as described in more detail below, such depositing of a coating composition may comprise an electrocoating step wherein an electrodepositable composition is deposited onto a metal substrate by electrodeposition. In certain other instances, as described in more detail below, such depositing of a coating composition comprises a powder coating step. In still other instances, the coating composition may be a liquid coating composition.

According to the present invention, the coating composition may comprise a thermosetting film-forming resin or a thermoplastic film-forming resin. As used herein, the term "film-forming resin" refers to resins that can form a self-supporting continuous film on at least a horizontal surface of a substrate upon removal of any diluents or carriers present in the composition or upon curing at ambient or elevated temperature. Conventional film-forming resins that may be used include, without limitation, those typically used in automotive OEM coating compositions, automotive refinish coating compositions, industrial coating compositions, architectural coating compositions, coil coating compositions, and aerospace coating compositions, among others. As used herein, the term "thermosetting" refers to resins that "set" irreversibly upon curing or crosslinking, wherein the polymer chains of the polymeric components are joined together by covalent bonds. This property is usually associated with a cross-linking reaction of the composition constituents often induced, for example, by heat or radiation. Curing or crosslinking reactions also may be carried out under ambient conditions. Once cured or crosslinked, a thermosetting resin will not melt upon the application of heat and is insoluble in solvents. As used herein, the term "thermoplastic" refers to resins that comprise polymeric components that are not joined by covalent bonds and thereby can undergo liquid flow upon heating and are soluble in solvents.

As previously indicated, according to the present invention, an electrodepositable coating composition comprising a water-dispersible, ionic salt group-containing film-forming resin that may be deposited onto the substrate by an electrocoating step wherein the electrodepositable coating composition is deposited onto the metal substrate by electrodeposition.

The ionic salt group-containing film-forming polymer may comprise a cationic salt group containing film-forming polymer for use in a cationic electrodepositable coating composition. As used herein, the term "cationic salt group-containing film-forming polymer" refers to polymers that include at least partially neutralized cationic groups, such as sulfonium groups and ammonium groups, that impart a positive charge. The cationic salt group-containing film-forming polymer may comprise active hydrogen functional groups, including, for example, hydroxyl groups, primary or secondary amine groups, and thiol groups. Cationic salt group-containing film-forming polymers that comprise active hydrogen functional groups may be referred to as active hydrogen-containing, cationic salt group-containing film-forming polymers. Examples of polymers that are suitable for use as the cationic salt group-containing film-forming polymer include, but are not limited to, alkyd polymers, acrylics, polyepoxides, polyamides, polyurethanes, polyureas, polyethers, and polyesters, among others.

The cationic salt group-containing film-forming polymer may be present in the cationic electrodepositable coating composition in an amount of 40% to 90% by weight, such as 50% to 80% by weight, such as 60% to 75% by weight, based on the total weight of the resin solids of the electrodepositable coating composition. As used herein, the "resin solids" include the ionic salt group-containing film-forming polymer, curing agent, and any additional water-dispersible non-pigmented component(s) present in the electrodepositable coating composition.

Alternatively, the ionic salt group containing film-forming polymer may comprise an anionic salt group containing film-forming polymer for use in an anionic electrodepositable coating composition. As used herein, the term "anionic salt group containing film-forming polymer" refers to an anionic polymer comprising at least partially neutralized anionic functional groups, such as carboxylic acid and phosphoric acid groups that impart a negative charge. The anionic salt group-containing film-forming polymer may comprise active hydrogen functional groups. Anionic salt group-containing film-forming polymers that comprise active hydrogen functional groups may be referred to as active hydrogen-containing, anionic salt group-containing film-forming polymers.

The anionic salt group-containing film-forming polymer may comprise base-solubilized, carboxylic acid group-containing film-forming polymers such as the reaction product or adduct of a drying oil or semi-drying fatty acid ester with a dicarboxylic acid or anhydride; and the reaction product of a fatty acid ester, unsaturated acid or anhydride and any additional unsaturated modifying materials which are further reacted with polyol. Also suitable are the at least partially neutralized interpolymers of hydroxy-alkyl esters of unsaturated carboxylic acids, unsaturated carboxylic acid and at least one other ethylenically unsaturated monomer. Still another suitable anionic electrodepositable resin comprises an alkyd-aminoplast vehicle, i.e., a vehicle containing an alkyd resin and an amine-aldehyde resin. Another suitable anionic electrodepositable resin composition comprises mixed esters of a resinous polyol. Other acid functional polymers may also be used such as phosphatized polyepoxide or phosphatized acrylic polymers. Exemplary phosphatized polyepoxides are disclosed in U.S. Patent Application Publication No. 2009-0045071 at [0004]-[0015] and U.S. Patent Application Ser. No. 13/232,093 at [0014]-[0040].

The anionic salt group-containing film-forming polymer may be present in the anionic electrodepositable coating composition in an amount 50% to 90%, such as 55% to 80%, such as 60% to 75%, based on the total weight of the resin solids of the electrodepositable coating composition.

The electrodepositable coating composition may further comprise a curing agent. The curing agent may react with the reactive groups, such as active hydrogen groups, of the ionic salt group-containing film-forming polymer to effectuate cure of the coating composition to form a coating. Non-limiting examples of suitable curing agents are at least partially blocked polyisocyanates, aminoplast resins and phenoplast resins, such as phenolformaldehyde condensates including allyl ether derivatives thereof.

The curing agent may be present in the cationic electrodepositable coating composition in an amount of 10% to 60% by weight, such as 20% to 50% by weight, such as 25% to 40% by weight, based on the total weight of the resin solids of the electrodepositable coating composition. Alternatively, the curing agent may be present in the anionic electrodepositable coating composition in an amount of 10% to 50% by weight, such as 20% to 45% by weight, such as 25% to 40% by weight, based on the total weight of the resin solids of the electrodepositable coating composition.

The electrodepositable coating composition may further comprise other optional ingredients, such as a pigment composition and, if desired, various additives such as fillers, plasticizers, anti-oxidants, biocides, UV light absorbers and stabilizers, hindered amine light stabilizers, defoamers, fungicides, dispersing aids, flow control agents, surfactants, wetting agents, or combinations thereof.

The electrodepositable coating composition may comprise water and/or one or more organic solvent(s). Water can for example be present in amounts of 40% to 90% by weight, such as 50% to 75% by weight, based on total weight of the electrodepositable coating composition. If used, the organic solvents may typically be present in an amount of less than 10% by weight, such as less than 5% by weight, based on total weight of the electrodepositable coating composition. The electrodepositable coating composition may in particular be provided in the form of an aqueous dispersion. The total solids content of the electrodepositable coating composition may be from 1% to 50% by weight, such as 5% to 40% by weight, such as 5% to 20% by weight, based on the total weight of the electrodepositable coating composition. As used herein, "total solids" refers to the non-volatile content of the electrodepositable coating composition, i.e., materials which will not volatilize when heated to 110°C for 15 minutes.

The cationic electrodepositable coating composition may be deposited upon an electrically conductive substrate by placing the composition in contact with an electrically conductive cathode and an electrically conductive anode, with the surface to be coated being the cathode. Alternatively, the anionic electrodepositable coating composition may be deposited upon an electrically conductive substrate by placing the composition in contact with an electrically conductive cathode and an electrically conductive anode, with the surface to be coated being the anode. An adherent film of the electrodepositable coating composition is deposited in a substantially continuous manner on the cathode or anode, respectively, when a sufficient voltage is impressed between the electrodes. The applied voltage may be varied and can be, for example, as low as one volt to as high as several thousand volts, such as between 50 and 500 volts. Current density is usually between 1.0 ampere and 15 amperes per square foot (10.8 to 161.5 amperes per square meter) and tends to decrease quickly during the electrodeposition process, indicating formation of a continuous self-insulating film.

Once the cationic or anionic electrodepositable coating composition is electrodeposited over at least a portion of the electroconductive substrate, the coated substrate is heated to a temperature and for a time sufficient to cure the electrodeposited coating on the substrate. For cationic electrodeposition, the coated substrate may be heated to a temperature ranging from 250°F to 450°F (121.1°C to 232.2°C), such as from 275°F to 400°F (135°C to 204.4°C), such as from 300°F to 360°F (149°C to 180°C). For anionic electrodeposition, the coated substrate may be heated to a temperature ranging from 200°F to 450°F (93°C to 232.2°C), such as from 275°F to 400°F (135°C to 204.4°C), such as from 300°F to 360°F (149°C to 180°C), such as 200°F to 210.2°F (93°C to 99°C). The curing time may be dependent upon the curing temperature as well as other variables, for example, the film thickness of the electrodeposited coating, level and type of catalyst present in the composition and the like. For example, the curing time can range from 10 minutes to 60 minutes, such as 20 to 40 minutes. The thickness of the resultant cured electrodeposited coating may range from 2 to 50 microns.

Alternatively, as mentioned above, according to the present invention, after the substrate has been contacted with the sealing composition, a powder coating composition may then be deposited onto at least a portion of the surface of the substrate. As used herein, "powder coating composition" refers to a coating composition which is completely free of water and/or solvent. Accordingly, the powder coating composition disclosed herein is not synonymous to waterborne and/or solvent-borne coating compositions known in the art.

According to the present invention, the powder coating composition may comprise (a) a film forming polymer having a reactive functional group; and (b) a curing agent that is reactive with the functional group. Examples of powder coating compositions that may be used in the present invention include the polyester-based ENVIROCRON line of powder coating compositions (commercially available from PPG Industries, Inc.) or epoxy-polyester hybrid powder coating compositions. Alternative examples of powder coating compositions that may be used in the present invention include low temperature cure thermosetting powder coating compositions comprising (a) at least one tertiary aminourea compound, at least one tertiary aminourethane compound, or mixtures thereof, and (b) at least one film-forming epoxy-containing resin and/or at least one siloxane-containing resin (such as those described in US Patent No. 7,470,752, assigned to PPG Industries, Inc. and incorporated herein by reference); curable powder coating compositions generally comprising (a) at least one tertiary aminourea compound, at least one tertiary aminourethane compound, or mixtures thereof, and (b) at least one film-forming epoxy-containing resin and/or at least one siloxane-containing resin (such as those described in US Patent No. 7,432,333, assigned to PPG Industries, Inc.); and those ccomprising a solid particulate mixture of a reactive group-containing polymer having a T_{g} of at least 30°C (such as those described in US Patent No. 6,797,387, assigned to PPG Industries, Inc.).

After deposition of the powder coating composition, the coating is often heated to cure the deposited composition. The heating or curing operation is often carried out at a temperature in the range of from 150°C to 200°C, such as from 170°C to 190°C, for a period of time ranging from 10 to 20 minutes. According to the invention, the thickness of the resultant film is from 50 microns to 125 microns.

As mentioned above, according to the present invention, the coating composition may be a liquid coating composition. As used herein, "liquid coating composition" refers to a coating composition which contains a portion of water and/or solvent. Accordingly, the liquid coating composition disclosed herein is synonymous to waterborne and/or solventborne coating compositions known in the art.

According to the present invention, the liquid coating composition may comprise, for example, (a) a film forming polymer having a reactive functional group; and (b) a curing agent that is reactive with the functional group. In other examples, the liquid coating may contain a film forming polymer that may react with oxygen in the air or coalesce into a film with the evaporation of water and/or solvents. These film forming mechanisms may require or be accelerated by the application of heat or some type of radiation such as Ultraviolet or Infrared. Examples of liquid coating compositions that may be used in the present invention include the SPECTRACRON^{®} line of solventbased coating compositions, the AQUACRON^{®} line of waterbased coating compositions, and the RAYCRON^{®} line of UV cured coatings (all commercially available from PPG Industries, Inc.).

Suitable film forming polymers that may be used in the liquid coating composition of the present invention may comprise a (poly)ester, an alkyd, a (poly)urethane, an isocyanurate, a (poly)urea, a (poly)epoxy, an anhydride, an acrylic, a (poly)ether, a (poly)sulfide, a (poly)amine, a (poly)amide, (poly)vinyl chloride, (poly)olefin, (poly)vinylidene fluoride, (poly)siloxane, or combinations thereof.

According to the present invention, the substrate that has been contacted with the sealing composition may also be contacted with a primer composition and/or a topcoat composition. The primer coat may be, for examples, chromate-based primers and advanced performance topcoats. According to the present invention, the primer coat can be a conventional chromate based primer coat, such as those available from PPG Industries, Inc. (product code 44GN072), or a chrome-free primer such as those available from PPG (DESOPRIME CA7502, DESOPRIME CA7521, Deft 02GN083, Deft 02GN084). Alternately, the primer coat can be a chromate-free primer coat, such as the coating compositions described in U.S. patent application Ser. No. 10/758,973, titled "CORROSION RESISTANT COATINGS CONTAINING CARBON", and U.S. patent application Ser. Nos. 10/758,972, and 10/758,972, both titled "CORROSION RESISTANT COATINGS", and other chrome-free primers that are known in the art, and which can pass the military requirement of MIL-PRF-85582 Class N or MIL-PRF-23377 Class N may also be used with the current invention.

As mentioned above, the substrate of the present invention also may comprise a topcoat. As used herein, the term "topcoat" refers to a mixture of binder(s) which can be an organic or inorganic based polymer or a blend of polymers, typically at least one pigment, can optionally contain at least one solvent or mixture of solvents, and can optionally contain at least one curing agent. A topcoat is typically the coating layer in a single or multi-layer coating system whose outer surface is exposed to the atmosphere or environment, and its inner surface is in contact with another coating layer or polymeric substrate. Examples of suitable topcoats include those conforming to MIL-PRF-85285D, such as those available from PPG (Deft 03W127A and Deft 03GY292). According to the present invention, the topcoat may be an advanced performance topcoat, such as those available from PPG (Defthane^{®} ELT.TM. 99GY001 and 99WO09). However, other topcoats and advanced performance topcoats can be used in the present invention as will be understood by those of skill in the art with reference to this disclosure.

According to the present invention, the metal substrate also may comprise a self-priming topcoat, or an enhanced self-priming topcoat. The term "self-priming topcoat", also referred to as a "direct to substrate" or "direct to metal" coating, refers to a mixture of a binder(s), which can be an organic or inorganic based polymer or blend of polymers, typically at least one pigment, can optionally contain at least one solvent or mixture of solvents, and can optionally contain at least one curing agent. The term "enhanced self-priming topcoat", also referred to as an "enhanced direct to substrate coating" refers to a mixture of functionalized fluorinated binders, such as a fluoroethylene-alkyl vinyl ether in whole or in part with other binder(s), which can be an organic or inorganic based polymer or blend of polymers, typically at least one pigment, can optionally contain at least one solvent or mixture of solvents, and can optionally contain at least one curing agent. Examples of self-priming topcoats include those that conform to TT-P-2756A. Examples of self-priming topcoats include those available from PPG (03W169 and 03GY369), and examples of enhanced self-priming topcoats include Defthane^{®} ELT^{™}/ESPT and product code number 97GY121, available from PPG. However, other self-priming topcoats and enhanced self-priming topcoats can be used in the coating system according to the present invention as will be understood by those of skill in the art with reference to this disclosure.

According to the present invention, the self-priming topcoat and enhanced self-priming topcoat may be applied directly to the sealed substrate. The self-priming topcoat and enhanced self-priming topcoat can optionally be applied to an organic or inorganic polymeric coating, such as a primer or paint film. The self-priming topcoat layer and enhanced self-priming topcoat is typically the coating layer in a single or multi-layer coating system where the outer surface of the coating is exposed to the atmosphere or environment, and the inner surface of the coating is typically in contact with the substrate or optional polymer coating or primer.

According to the present invention, the topcoat, self-priming topcoat, and enhanced self-priming topcoat can be applied to the sealed substrate, in either a wet or "not fully cured" condition that dries or cures over time, that is, solvent evaporates and/or there is a chemical reaction. The coatings can dry or cure either naturally or by accelerated means for example, an ultraviolet light cured system to form a film or "cured" paint. The coatings can also be applied in a semi or fully cured state, such as an adhesive.

In addition, a colorant and, if desired, various additives such as surfactants, wetting agents or catalyst can be included in the coating composition (electrodepositable, powder, or liquid). As used herein, the term "colorant" means any substance that imparts color and/or other opacity and/or other visual effect to the composition. Example colorants include pigments, dyes and tints, such as those used in the paint industry and/or listed in the Dry Color Manufacturers Association (DCMA), as well as special effect compositions.

In general, the colorant can be present in the coating composition in any amount sufficient to impart the desired visual and/or color effect. The colorant may comprise from 1 to 65 weight percent, such as from 3 to 40 weight percent or 5 to 35 weight percent, with weight percent based on the total weight of the composition.

For purposes of the following detailed description, it is to be understood that the invention may assume various alternative variations and step sequences, except where expressly specified to the contrary. Moreover, other than in any operating examples, or where otherwise indicated, all numbers such as those expressing values, amounts, percentages, ranges, subranges and fractions may be read as if prefaced by the word "about," even if the term does not expressly appear. Accordingly, unless indicated to the contrary, the numerical parameters set forth in the following specification and attached claims are approximations that may vary depending upon the desired properties to be obtained by the present invention. At the very least, and not as an attempt to limit the application of the doctrine of equivalents to the scope of the claims, each numerical parameter should at least be construed in light of the number of reported significant digits and by applying ordinary rounding techniques. Where a closed or open-ended numerical range is described herein, all numbers, values, amounts, percentages, subranges and fractions within or encompassed by the numerical range are to be considered as being specifically included in and belonging to the original disclosure of this application as if these numbers, values, amounts, percentages, subranges and fractions had been explicitly written out in their entirety.

Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard variation found in their respective testing measurements.

As used herein, unless indicated otherwise, a plural term can encompass its singular counterpart and vice versa, unless indicated otherwise. For example, although reference is made herein to "a" conversion composition, "a" sealing composition, and "an" oxidizing agent, a combination (i.e., a plurality) of these components can be used. In addition, in this application, the use of "or" means "and/or" unless specifically stated otherwise, even though "and/or" may be explicitly used in certain instances.

As used herein, "including," "containing" and like terms are understood in the context of this application to be synonymous with "comprising" and are therefore open-ended and do not exclude the presence of additional undescribed and/or unrecited elements, materials, ingredients and/or method steps. As used herein, "consisting of" is understood in the context of this application to exclude the presence of any unspecified element, ingredient and/or method step. As used herein, "consisting essentially of" is understood in the context of this application to include the specified elements, materials, ingredients and/or method steps "and those that do not materially affect the basic and novel characteristic(s)" of what is being described.

Unless otherwise disclosed herein, the term "substantially free," when used with respect to the absence of a particular material, means that such material, if present at all in a composition, a bath containing the composition, and/or layers formed from and comprising the composition, only is present in a trace amount of 5 ppm or less based on a total weight of the composition or layer(s), as the case may be, excluding any amount of such material that may be present or derived as a result of drag-in, substrate(s), and/or dissolution of equipment). Unless otherwise disclosed herein, the term "essentially free," when used with respect to the absence of a particular material, means that such material, if present at all in a composition, a bath containing the composition, and/or layers formed from and comprising the composition, only is present in a trace amount of 1 ppm or less based on a total weight of the composition or layer(s), as the case may be. Unless otherwise disclosed herein, the term "completely free," when used with respect to the absence of a particular material, means that such material, if present at all in a composition, a bath containing the composition, and/or layers formed from and comprising the composition, is absent from the composition, the bath containing the composition, and/or layers formed from and comprising same (i.e., the composition, bath containing the composition, and/or layers formed from and comprising the composition contain 0 ppm of such material).

As used herein, the terms "on," "onto," "applied on," "applied onto," "formed on," "deposited on," "deposited onto," mean formed, overlaid, deposited, and/or provided on but not necessarily in contact with the surface. For example, a coating layer "formed over" a substrate does not preclude the presence of one or more other intervening coating layers of the same or different composition located between the formed coating layer and the substrate.

As used herein, a "salt" refers to an ionic compound made up of metal cations and non-metallic anions and having an overall electrical charge of zero. Salts may be hydrated or anhydrous.

As used herein, "aqueous composition" refers to solution or dispersion in a medium that comprises predominantly water. For example, the aqueous medium may comprise water in an amount of more than 50 wt.%, or more than 70 wt.% or more than 80 wt.% or more than 90 wt.% or more than 95 wt.%, based on the total weight of the medium. The aqueous medium may for example consist substantially of water.

As used herein, "conversion composition" refers to a composition that is capable of reacting with and chemically altering the substrate surface and binding to it to form a film that affords corrosion protection.

As used herein, "conversion bath" refers to an aqueous bath containing the conversion composition and that may contain components that are byproducts of the process of contacting a substrate with the conversion composition.

As used herein, the term "conversion composition metal cation(s)" refers to metal cations of a lanthanide series element, a Group IIA metal, a Group IIIB metal, a Group IVB metal, a Group VB metal, a Group VIB metal, a Group VIIB metal, and/or a Group XII metal.

As used herein, a "sealing composition" refers to a composition, e.g. a solution or dispersion, that affects a substrate surface or a material deposited onto a substrate surface in such a way as to alter the physical and/or chemical properties of the substrate surface (i.e., the composition affords corrosion protection).

As used herein, the term "Group IA metal" refers to an element that is in Group IA of the CAS version of the Periodic Table of the Elements as is shown, for example, in the Handbook of Chemistry and Physics, 63rd edition (1983), corresponding to Group 1 in the actual IUPAC numbering.

As used herein, the term "Group IA metal compound" refers to compounds that include at least one element that is in Group IA of the CAS version of the Periodic Table of the Elements.

As used herein, the term "Group IIIB metal" refers to yttrium and scandium of the CAS version of the Periodic Table of the Elements as is shown, for example, in the Handbook of Chemistry and Physics, 63rd edition (1983), corresponding to Group 3 in the actual IUPAC numbering. For clarity, "Group IIIB metal" expressly excludes lanthanide series elements.

As used herein, the term "Group IIIB metal compound" refers to compounds that include at least one element that is in group IIIB of the CAS version of the Periodic Table of the Elements as defined above.

As used herein, the term "Group IVB metal" refers to an element that is in group IVB of the CAS version of the Periodic Table of the Elements as is shown, for example, in the Handbook of Chemistry and Physics, 63rd edition (1983), corresponding to Group 4 in the actual IUPAC numbering.

As used herein, the term "Group IVB metal compound" refers to compounds that include at least one element that is in Group IVB of the CAS version of the Periodic Table of the Elements.

As used herein, the term "Group VB metal" refers to an element that is in group VB of the CAS version of the Periodic Table of the Elements as is shown, for example, in the Handbook of Chemistry and Physics, 63rd edition (1983), corresponding to Group 5 in the actual IUPAC numbering.

As used herein, the term "Group VB metal compound" refers to compounds that include at least one element that is in Group VB of the CAS version of the Periodic Table of the Elements.

As used herein, the term "Group VIB metal" refers to an element that is in group VIB of the CAS version of the Periodic Table of the Elements as is shown, for example, in the Handbook of Chemistry and Physics, 63rd edition (1983), corresponding to Group 6 in the actual IUPAC numbering.

As used herein, the term "Group VIB metal compound" refers to compounds that include at least one element that is in Group VIB of the CAS version of the Periodic Table of the Elements.

As used herein, the term "lanthanide series elements" refers to elements 57-71 of the CAS version of the Periodic Table of the Elements and includes elemental versions of the lanthanide series elements. In embodiments, the lanthanide series elements may be those which have both common oxidation states of +3 and +4, referred to hereinafter as +3/+4 oxidation states.

As used herein, the term "lanthanide compound" refers to compounds that include at least one of elements 57-71 of the CAS version of the Periodic Table of the Elements.

As used herein, the term "halogen" refers to any of the elements fluorine, chlorine, bromine, iodine, and astatine of the CAS version of the Periodic Table of the Elements, corresponding to Group VIIA of the periodic table.

As used herein, the term "halide" refers to compounds that include at least one halogen.

As used herein, the term "aluminum," when used in reference to a substrate, refers to substrates made of or comprising aluminum and/or aluminum alloy, and clad aluminum substrates.

As used herein, the term "oxidizing agent," when used with respect to a component of the conversion composition, refers to a chemical which is capable of oxidizing at least one of: a metal present in the substrate which is contacted by the conversion composition, a lanthanide series element present in the conversion composition, and/or a metal-complexing agent present in the conversion composition. As used herein with respect to "oxidizing agent," the phrase "capable of oxidizing" means capable of removing electrons from an atom or a molecule present in the substrate or the conversion composition, as the case may be, thereby decreasing the number of electrons of such atom or molecule.

Pitting corrosion is the localized formation of corrosion by which cavities or holes are produced in a substrate. The term "pit," as used herein, refers to such cavities or holes resulting from pitting corrosion and is characterized by (1) a rounded, elongated or irregular appearance when viewed normal to the test panel surface, (2) a "comet-tail", a line, or a "halo" (i.e., a surface discoloration) emanating from the pitting cavity, and (3) the presence of corrosion byproduct (e.g., white, grayish or black granular, powdery or amorphous material) inside or immediately around the pit. An observed surface cavity or hole must exhibit at least two of the above characteristics to be considered a corrosion pit. Surface cavities or holes that exhibit only one of these characteristics may require additional analysis before being classified as a corrosion pit. Visual inspection using a microscope with 10X magnification is used to determine the presence of corrosion byproducts when corrosion byproducts are not visible with the unaided eye.

Unless otherwise disclosed herein, as used herein, the terms "total composition weight", "total weight of a composition" or similar terms refer to the total weight of all ingredients being present in the respective composition including any carriers and solvents.

In view of the foregoing description the present invention thus relates in particular, without being limited thereto, to the following Aspects 1-35:

Whereas particular features of the present invention have been described above for purposes of illustration, it will be evident to those skilled in the art that numerous variations of the details of the coating composition, coating, and methods disclosed herein may be made without departing from the scope in the appended claims.

Illustrating the invention are the following examples that are not to be considered as limiting the invention to their details. All parts and percentages in the examples, as well as throughout the specification, are by weight unless otherwise indicated.

### EXAMPLES

**Table 3 - Materials for Examples 1-5**

| | |
|---|---|
| Ridoline 298¹ | Henkel AG & Co. (Germany) |
| Deoxidizer 6-16² (6-16) | Henkel AG & Co. |
| Nitric acid | |
| cerium nitrate solution (65.37% Ce(NO₃)₃ · 6H₂O) | ProChem Inc. (Rockford, IL) |
| yttrium nitrate solution (72.45% Y(NO₃)₃ · 6H₂O) | ProChem Inc. |
| cerium chloride solution (32.2% as CeO₂*) | ProChem Inc. |
| hydrogen peroxide (30% H₂O₂) | Alfa Aesar (Ward Hill, MA) |
| sodium hydroxide pellets, 98% | Alfa Aesar |
| sodium phosphate dodecahydrate, 97% | Alfa Aesar |
| polyvinylpyrrolidone (PVP), 8000 m.w. | Alfa Aesar |
| Allantoin³, 98% | Alfa Aesar |
| 2,5-dimercapto-1,3,4-thiadiazole, 98% | Acros Organics (Geel, Belgium) |
| Carbowet GA100⁴, 100% | Air Products (Cleveland, OH) |
| lithium carbonate, 98% | Alfa Aesar |
| sodium vanadium oxide, 96% | Ward Hill |
| sodium molybdenum oxide dehydrate, 98% | Alfa Aesar |

| | |
|---|---|
| ¹ A non-silicated cleaner. ² A deoxidizer. ³ (2,5-dioxo-4-imidazolidinyl) urea. ⁴ A non-ionic surfactant. * As per the supplier's analytical report, the concentration of cerium in the cerium chloride solution is measured as cerium oxide (CeO₂). | |

**Table 4 - Equipment**

| Technique | Equipment | Operating parameters |
|---|---|---|
| X-ray Fluorescence (XRF) Measurements | X-Met 7500, Oxford Instruments | Operating Parameters for lanthanides, Group IIIB metals and Group IVB metals except zirconium: |
| | | 60 second timed assay |
| | | Voltage/current/filter: 15Kv_45µA_filter 3 |
| | | Dpp parameters: T(p) = 1.5µs |

### Cleaners for Examples 1-8

**Table 5A. - Example A**

| **INGREDIENTS** | **% BY WEIGHT** |
|---|---|
| sodium hydroxide pellets, 98% | 1.6 |
| sodium phosphate dodecahydrate, 97% | 6.3 |
| polyvinylpyrrolidone (PVP), 8000 m.w. | 0.02 |
| Allantoin, 98% | 0.03 |
| 2,5-dimercapto-1,3,4-thiadiazole( DMTD), 98% | 1.00 |
| Carbowet GA100 | 4.1 |
| deionized water | 98.7 |

The ingredients used to prepare a solution of cleaner Example A are provided in Table 5A. Sodium hydroxide and sodium phosphate were completely dissolved in deionized water under mild mechanical agitation using a stir plate (VWR, 7x7 CER HOT/STIR). Next, the PVP was stirred in until dissolved, and then Allantoin was added and stirred until dissolved, and then the DMTD was added and stirred until dissolved. After the DMTD was completely dissolved, Carbowet GA100 was stirred in under mild mechanical agitation as above.

**Table 5B - Example B**

| | |
|---|---|
| Ridoline 298 (R298), parts by volume | 100 |
| tap water, parts by volume | 900 |

The solution of Example B was prepared using the ingredients shown in Table 5B, per manufacturer's instructions.

**Table 6 - Deoxidizer for Examples 4 and 5**

| **Material** | **Example C** |
|---|---|
| Deoxidizer 6-16, parts by volume | 100 |
| nitric acid, parts by volume | 200 |
| tap water, parts by volume | 1700 |

Deoxidizer solutions of Example C was prepared using the ingredients shown in Table 6, per manufacturers' instructions.

**Table 7 - Conversion Coating Compositions for Examples 1 and 3-8**

| | Yttrium Nitrate Solution (g) | Cerium Nitrate Solution (g) | Cerium Chloride Solution (g) | Hydrogen Peroxide Solution (g) | Deionized Water (g) |
|---|---|---|---|---|---|
| **Example E** | 12.48 | 10.40 | 0.04 | 1.04 | 1953 |
| **Example F** | 0.00 | 0.00 | 84.0 | 5.20 | 1953 |

The ingredients used to prepare conversion coating compositions E and F are shown in Table 7.

For the conversion coating composition of Example E, the cerium nitrate, yttrium nitrate and cerium chloride solutions were weighted into individual cups. Then using 500 grams of deionized water, the solutions were transferred to a vessel containing 1000 grams of deionized water under mild agitation. The remaining 453 grams of water was added and the solution was stirred for 10 minutes to ensure uniformity before the hydrogen peroxide was added. The final solution stirred for a minimum of 30 minutes before use.

For the conversion coating composition of Example F, solutions were prepared by adding the cerium chloride solution to the full amount of deionized water under mild agitation. The solution was stirred for 10 minutes to ensure uniformity before the hydrogen peroxide was added. The final solution stirred for a minimum of 30 minutes before use.

**Table 8 - Sealing Compositions of Examples 2-9**

| **Material** | **Example G** | **Example H** | **Example I** |
|---|---|---|---|
| lithium carbonate, grams | 3.07 | 3.07 | 3.07 |
| deionized water, grams | 1996.93 | 1996.93 | 1996.93 |
| sodium vanadium oxide, grams | ---- | 1.67 | ---- |
| sodium molybdenum oxide dehydrate, grams | ---- | ---- | 1.67 |

The sealing solution of Example G was prepared using the ingredients shown in Table 8 by dissolving lithium carbonate in deionized water under mild agitation using the stir plate as described above.

The sealing solution of Example H was prepared using the ingredients shown in Table 8 by dissolving lithium carbonate in deionized water under mild agitation using the stir plate as described above. Next, the sodium vanadium oxide was added and dissolved under mild agitation as described above.

The sealing solution of Example I was prepared using the ingredients shown in Table 8 by dissolving lithium carbonate in deionized water under mild agitation using the stir plate as described above. Next, the sodium molybdenum oxide dehydrate was added and dissolved under mild agitation as described above.

### Example 1

Aluminum 2024T3 bare substrate (Priority Metals, Orange County, CA) measuring 8 x 13 x 0.08 cm (3" x 5" x 0.032") was hand-wiped with methyl ethyl ketone (100%) and a disposable cloth and allowed to air dry prior to chemical cleaning. The panel was immersed in the cleaner solution of **Example A** for 3.5 minutes at ambient temperature with intermittent agitation. The panel was then immersed in two subsequent deionized water rinses for two minutes each, both at ambient temperature with intermittent agitation. After the second rinse, the panel received a cascading deionized water rinse for 10 seconds. The panel was then immersed in the conversion coating composition of **Example E** for 5 minutes at ambient temperature and without agitation. After the conversion coating, the panel received an immersion rinse in deionized water for 1 minute at ambient temperature with intermittent agitation followed by a 10 second cascading deionized water rinse. The panel was air dried at ambient conditions overnight before testing.

### Example 2

Aluminum 2024T3 bare substrate measuring 8 x 13 x 0.08 cm (3" x 5" x 0.032") was hand-wiped with methyl ethyl ketone (100%) and a disposable cloth and allowed to air dry prior to chemical cleaning. The panel was immersed in the cleaner solution of **Example A** for 3.5 minutes at ambient temperature with intermittent agitation. The panel was then immersed in two subsequent deionized water rinses for two minutes each, both at ambient temperature with intermittent agitation. After the second rinse, the panel received a cascading deionized water rinse for 10 seconds. The panel was then immersed in the seal solution of **Example G** for 2 minutes at ambient temperature with intermittent agitation. The panel was air dried at ambient conditions overnight before testing.

### Example 3

Aluminum 2024T3 bare substrate measuring 8 x 13 x 0.08 cm (3" x 5" x 0.032") was hand-wiped with methyl ethyl ketone (100%) and a disposable cloth and allowed to air dry prior to chemical cleaning. The panel was immersed in the cleaner solution of **Example A** for 3.5 minutes at ambient temperature with intermittent agitation. The panel was then immersed in two subsequent deionized water rinses for two minutes each, both at ambient temperature with intermittent agitation. After the second rinse, the panel received a cascading deionized water rinse for 10 seconds. The panel was then immersed in the conversion coating composition of **Example E** for 5 minutes at ambient temperature and without agitation. After the conversion coating, the panel received an immersion rinse in deionized water for 1 minute at ambient temperature with intermittent agitation followed by a 10 second cascading deionized water rinse. The panel was then immersed in the seal solution of **Example G** for 2 minutes at ambient temperature with intermittent agitation. The panel was air dried at ambient conditions overnight before testing.

### Example 4

Aluminum 2024T3 bare substrate measuring 8 x 13 x 0.08 cm (3" x 5" x 0.032") was hand-wiped with methyl ethyl ketone (100%) and a disposable cloth and allowed to air dry prior to chemical cleaning. The panel was immersed in the cleaner solution of **Example B** for 2 minutes at 55°C with mild agitation. The panel was then immersed in a tap water rinse for one minute at ambient temperature with mild agitation followed by a 10 second cascading tap water rinse. The panel was immersed in a deoxidizing solution of **Example C** for 1.5 minutes at ambient temperature followed by a one minute immersion rinse in tap water at ambient temperature and mild agitation followed by a 10 second cascading rinse. The panel was then immersed in the conversion coating composition of **Example E** for 5 minutes at ambient temperature and without agitation. After the conversion coating, the panel received an immersion rinse in deionized water for 1 minute at ambient temperature with intermittent agitation followed by a 10 second cascading deionized water rinse. The panel was then immersed in the seal solution of **Example G** for 2 minutes at ambient temperature with intermittent agitation. The panel was air dried at ambient conditions overnight before testing.

### Example 5

Aluminum 2024T3 bare substrate measuring 8 x 13 x 0.08 cm (3" x 5" x 0.032") was hand-wiped with methyl ethyl ketone (100%) and a disposable cloth and allowed to air dry prior to chemical cleaning. The panel was immersed in the cleaner solution of **Example B** for 2 minutes at 55°C with mild agitation. The panel was then immersed in a tap water rinse for one minute at ambient temperature with mild agitation followed by a 10 second cascading tap water rinse. The panel was immersed in a deoxidizing solution of **Example C** for 1.5 minutes at ambient temperature followed by a one minute immersion rinse in tap water at ambient temperature and mild agitation followed by a 10 second cascading rinse. The panel was then immersed in the conversion coating composition of **Example F** for 7 minutes at ambient temperature and without agitation. After the conversion coating, the panel received an immersion rinse in deionized water for 1 minute at ambient temperature with intermittent agitation followed by a 10 second cascading deionized water rinse. The panel was then immersed in the seal solution of **Example G** for 2 minutes at ambient temperature with intermittent agitation. The panel was air dried at ambient conditions overnight before testing.

### Example 6

A 8 x 25 x 0.08 cm (3" x 10" x 0.032") panel of Al 2024-T3 was solvent wiped on both sides with Methyl Ethyl Ketone using a lint-free paper towel until the surface was visually free from grease and oil. The panel was then immersed in the cleaner solution of **Example A** for 7 minutes at ambient temperature. Next, the panel was then rinsed using a de-ionized water spray rinse for two minutes followed by a de-ionized water immersion rinse for two minutes. The panel was then immersed in the conversion coating composition of **Example E** for 5 minutes at ambient temperature. The panel was then immersed in de-ionized water for two minutes, followed by a second de-ionized water rinse for two minutes. The metal substrate was then immersed in the sealing composition of **Example G** for two minutes. The panel was allowed to air dry at ambient conditions prior to testing.

### Example 7

A 8 x 25 x 0.08 cm (3" x 10" x 0.032") panel of Al 2024-T3 was solvent wiped on both sides with Methyl Ethyl Ketone using a lint-free paper towel until the surface was visually free from grease and oil. The panel was then immersed in the cleaner solution of **Example A** for 7 minutes at ambient temperature. Next, the panel was then rinsed using a de-ionized water spray rinse for two minutes followed by a de-ionized water immersion rinse for two minutes. The panel was then immersed in the conversion coating composition of **Example E** for 5 minutes at ambient temperature. The panel was then immersed in de-ionized water for two minutes, followed by a second de-ionized water rinse for two minutes. The metal substrate was then immersed in the sealing composition of **Example H** for 2 minutes. The panel was allowed to air dry at ambient conditions prior to testing.

### Example 8

A 8 x 25 x 0.08 cm (3" x 10" x 0.032") panel of Al 2024-T3 was solvent wiped on both sides with Methyl Ethyl Ketone using a lint-free paper towel until the surface was visually free from grease and oil. The panel was then immersed in the cleaner solution of **Example A** for 7 minutes. Next, the panel was rinsed using a de-ionized water spray rinse for two minutes followed by a de-ionized water immersion rinse for two minutes. The panel was then immersed in the conversion coating composition of **Example E** for 5 minutes at ambient temperature. The panel was then immersed in de-ionized water for two minutes, followed by a second de-ionized water rinse for two minutes. The metal substrate was then immersed in the sealing composition of **Example I** described above for 2 minutes. The panel was allowed to air dry at ambient conditions prior to testing.

### Evaluation of the Panels of Examples 1-8

The panels from Examples 1-5 were analyzed for deposition of lanthanide using X-ray fluorescence (measured using X-Met 7500, Oxford Instruments; operating parameters 60 second timed assay, 15Kv, 45µA, filter 3, T(p) = 1.5µs). Data are reported in Table 9.

The panels from Examples 1-5 were evaluated for corrosion resistance by placing each panel in a 7 day exposure neutral salt spray cabinet operated according to ASTM B117. Corrosion performance was evaluated by counting the number of pits visible to the naked eye on the panels. Data are reported in Table 9.

The panels from Examples 6-8 were evaluated for corrosion resistance by placing each panels in a 3 day exposure neutral salt spray cabinet operated according to ASTM B117. Corrosion performance was evaluated using the rating scale shown in Table 10. Data are reported in Table 9.

**Table 9 - Corrosion performance and XRF readings**

| | Clean / Deox | Conversion Composition | Sealing Composition | Salt Spray | XRF Reading |
|---|---|---|---|---|---|
| | | | | **7 days** | |
| 1 | Example A | Example E | None | 100+ pits | 662 (Ce) |
| 2 | Example A | None | Example G | 100+ pits | 299 (Ce) - baseline |
| 3 | Example A | Example E | Example G | 0 pits | 768 (Ce) |
| 4 | Example B/C | Example E | Example G | 100+ pits | 313 (Ce) |
| 5 | Example B/C | Example F | Example G | 3 pits | 1478 (Ce) |

| | | | | **3 days** | |
|---|---|---|---|---|---|
| 6 | Example A | Example E | Example G | 8 (rating) | n/a |
| 7 | Example A | Example E | Example H | 9 (rating) | n/a |
| 8 | Example A | Example E | Example I | 10 (rating) | n/a |

**Table 10 - Rating Scale for Salt Spray**

| Rating | Description |
|---|---|
| 10 | identical to how they went in to test/no corrosion |
| 9 | passes with no "countable" pits (if there is a pit, it's either from an edge, scratch, preexisting, etc.) |
| 8 | ≤ five pits with corrosion salt tails |
| 7 | ≥ 5 pits with tails and ≤ 15 pits total |
| 6 | > 15 pits total and ≤ 40 pits total |
| 5 | 30% surface corrosion |
| 4 | 50% surface corrosion |
| 3 | 70% surface corrosion |
| 2 | 85% surface corrosion |
| 1 | 100% surface corrosion |

The data shown in Table 9 demonstrate that the combination contacting a substrate surface with a lanthanide-containing conversion composition and a lithium-containing sealing composition that includes either a molybdenum salt or a vanadium salt further reduced the level of pitting on the substrate surface following 3 day exposure in neutral salt spray cabinet operated according to ASTM B117 compared to a substrate surface that has been contacted with the conversion composition and a sealing composition that does not include the molybdenum salt or the vanadium salt.

The data shown in Table 9 also demonstrate that contacting an anodized substrate with the lithium-containing sealing composition resulted in a treated substrate which had a salt spray rating of 8 following 7 day exposure in neutral salt spray cabinet operated according to ASTM B117.

The data shown in Table 9 also demonstrate that the combination of a film formed from a lanthanide-containing conversion composition with a layer formed from a lithium-containing sealing composition results in at least a 50% reduction in the number of pits on the substrate surface compared to a substrate surface that has the conversion composition film or the sealing composition layer but not both following 7 day exposure in neutral salt spray cabinet operated according to ASTM B117.

### Examples AA through MM

**Table 11 - Additional Materials for Examples BB, FF and II through LL**

| | |
|---|---|
| Yttrium Chloride, 99.9% | Alfa Aesar |
| Potassium Hexafluorozirconate, 99% | Alfa Aesar |
| Potassium Hexafluorotitanate, 97% | Alfa Aesar |

**Table 12 - Additional Conversion Coating Compositions for Examples BB through FF**

| | Yttrium Nitrate Solution (g) | Yttrium Chloride Solid (g) | Cerium Nitrate Solution (g) | Cerium Chloride Solution (g) | Hydrogen Peroxide Solution (g) | Deionized Water (g) |
|---|---|---|---|---|---|---|
| **Example J** | --- | --- | 25.08 | .04 | 1.01 | 1874.88 |
| **Example K** | 19.97 | 0.015 | --- | --- | 1.01 | 1880.03 |

**Table 13 - Additional Conversion Coating Compositions for Examples JJ through MM**

| | Potassium Hexafluorozirconate (g) | Potassium Hexafluorotitanate (g) | Hydrogen Peroxide Solution (g) | Deionized Water (g) |
|---|---|---|---|---|
| **Example L** | 2.38 | --- | 1.19 | 1897.60 |
| **Example M** | --- | 2.38 | 1.00 | 1897.60 |

### Preparation of Conversion Compositions

The ingredients used to prepare conversion coating compositions J and K are shown in Table 12.

For the conversion coating composition of Example J, the cerium nitrate and cerium chloride solutions were weighted into individual cups. Then using 500 grams of deionized water, the solutions were transferred to a vessel containing 1000 grams of deionized water under mild agitation. The remaining 374.88 grams of water were added and the solution was stirred for 10 minutes to ensure uniformity before the hydrogen peroxide was added. The final solution stirred for a minimum of 30 minutes before use.

For the conversion coating composition of Example K, the yttrium nitrate and yttrium chloride solutions were weighted into individual cups. Then using 500 grams of deionized water, the solutions were transferred to a vessel containing 1000 grams of deionized water under mild agitation. The remaining 380.03 grams of water were added and the solution was stirred for 10 minutes to ensure uniformity before the hydrogen peroxide was added. The final solution stirred for a minimum of 30 minutes before use.

For the conversion coating compositions of Examples II through LL, the entire amount of deionized water was weighed into a container. The zirconium salt was measured into a separate cup then transferred into the vessel containing the deionized water while under moderate stirring. The solution continued to stir for 15 minutes to allow the entire amount of salt to dissolve. This exact process was used to prepare the titanium solution.

### Example AAA (Comparative)

Aluminum 2024T3 bare substrate (Priority Metals, Orange County, CA) measuring 8 x 13 x 0.08 cm (3" x 5" x 0.032") was hand-wiped with methyl ethyl ketone (100%) and a disposable cloth and allowed to air dry prior to chemical cleaning. The panel was immersed in the cleaner solution of **Example A** for 3.5 minutes at ambient temperature with intermittent agitation. The panel was then immersed in two subsequent deionized water rinses for two minutes each, both at ambient temperature with intermittent agitation. After the second rinse, the panel was air dried at ambient conditions overnight before testing.

The panel was placed in 3 day and 7 day exposure in neutral salt spray cabinet operated according to ASTM B117. Corrosion performance was evaluated by counting the number of pits visible to the naked eye on the panels. Data are reported in Table 14.

### Example AA

Aluminum 2024T3 bare substrate (Priority Metals, Orange County, CA) measuring 8 x 13 x 0.08 cm (3" x 5" x 0.032") was hand-wiped with methyl ethyl ketone (100%) and a disposable cloth and allowed to air dry prior to chemical cleaning. The panel was immersed in the cleaner solution of **Example A** for 3.5 minutes at ambient temperature with intermittent agitation. The panel was then immersed in two subsequent deionized water rinses for two minutes each, both at ambient temperature with intermittent agitation. After the second rinse, the panel received a cascading deionized water rinse for 10 seconds. The panel was then immersed in the seal solution of **Example G** for 2 minutes at ambient temperature with intermittent agitation. The panel was air dried at ambient conditions overnight before testing.

### Example BB

Aluminum 2024T3 bare substrate (Priority Metals, Orange County, CA) measuring 8 x 13 x 0.08 cm (3" x 5" x 0.032") was hand-wiped with methyl ethyl ketone (100%) and a disposable cloth and allowed to air dry prior to chemical cleaning. The panel was immersed in the cleaner solution of **Example A** for 3.5 minutes at ambient temperature with intermittent agitation. The panel was then immersed in two subsequent deionized water rinses for two minutes each, both at ambient temperature with intermittent agitation. After the second rinse, the panel received a cascading deionized water rinse for 10 seconds. The panel was then immersed in the conversion coating of **Example J** for 5 minutes at ambient temperature and without agitation. After the conversion coating, the panel received an immersion rinse in deionized water for 2 minutes at ambient temperature with intermittent agitation followed by a 10 second cascading deionized water rinse. The panel was air dried at ambient conditions overnight before testing.

### Example CC

Aluminum 2024T3 bare substrate (Priority Metals, Orange County, CA) measuring 8 x 13 x 0.08 cm (3" x 5" x 0.032") was hand-wiped with methyl ethyl ketone (100%) and a disposable cloth and allowed to air dry prior to chemical cleaning. The panel was immersed in the cleaner solution of **Example A** for 3.5 minutes at ambient temperature with intermittent agitation. The panel was then immersed in two subsequent deionized water rinses for two minutes each, both at ambient temperature with intermittent agitation. After the second rinse, the panel received a cascading deionized water rinse for 10 seconds. The panel was then immersed in the conversion coating of **Example K** for 5 minutes at ambient temperature and without agitation. After the conversion coating, the panel received an immersion rinse in deionized water for 2 minutes at ambient temperature with intermittent agitation followed by a 10 second cascading deionized water rinse. The panel was air dried at ambient conditions overnight before testing.

### Example DD

Aluminum 2024T3 bare substrate measuring 8 x 13 x 0.08 cm (3" x 5" x 0.032") was hand-wiped with methyl ethyl ketone (100%) and a disposable cloth and allowed to air dry prior to chemical cleaning. The panel was immersed in the cleaner solution of **Example B** for 2 minutes at 55°C with mild agitation. The panel was then immersed in a tap water rinse for one minute at ambient temperature with mild agitation followed by a 10 second cascading tap water rinse. The panel was immersed in a deoxidizing solution of **Example C** for 1.5 minutes at ambient temperature followed by a one minute immersion rinse in tap water at ambient temperature and mild agitation followed by a 10 second cascading rinse. The panel was then immersed in the conversion coating of **Example J** for 5 minutes at ambient temperature and without agitation. After the conversion coating, the panel received an immersion rinse in deionized water for 2 minutes at ambient temperature with intermittent agitation followed by a 10 second cascading deionized water rinse. The panel was then immersed in the seal solution of **Example G** for 2 minutes at ambient temperature with intermittent agitation. The panel was air dried at ambient conditions overnight before testing.

### Example EE

Aluminum 2024T3 bare substrate measuring 8 x 13 x 0.08 cm (3" x 5" x 0.032") was hand-wiped with methyl ethyl ketone (100%) and a disposable cloth and allowed to air dry prior to chemical cleaning. The panel was immersed in the cleaner solution of **Example A** for 3.5 minutes at ambient temperature with intermittent agitation. The panel was then immersed in two subsequent deionized water rinses for two minutes each, both at ambient temperature with intermittent agitation. After the second rinse, the panel received a cascading deionized water rinse for 10 seconds. The panel was then immersed in the conversion coating of **Example J** for 5 minutes at ambient temperature and without agitation. After the conversion coating, the panel received an immersion rinse in deionized water for 2 minutes at ambient temperature with intermittent agitation followed by a 10 second cascading deionized water rinse. The panel was then immersed in the seal solution of **Example G** for 2 minutes at ambient temperature with intermittent agitation. The panel was air dried at ambient conditions overnight before testing.

### Example FF

Aluminum 2024T3 bare substrate measuring 8 x 13 x 0.08 cm (3" x 5" x 0.032") was hand-wiped with methyl ethyl ketone (100%) and a disposable cloth and allowed to air dry prior to chemical cleaning. The panel was immersed in the cleaner solution of Example A for 3.5 minutes at ambient temperature with intermittent agitation. The panel was then immersed in two subsequent deionized water rinses for two minutes each, both at ambient temperature with intermittent agitation. After the second rinse, the panel received a cascading deionized water rinse for 10 seconds. The panel was then immersed in the conversion coating of **Example K** for 5 minutes at ambient temperature and without agitation. After the conversion coating, the panel received an immersion rinse in deionized water for 2 minutes at ambient temperature with intermittent agitation followed by a 10 second cascading deionized water rinse. The panel was then immersed in the seal solution of **Example G** for 2 minutes at ambient temperature with intermittent agitation. The panel was air dried at ambient conditions overnight before testing.

### Example GG

Aluminum 2024T3 bare substrate measuring 8 x 13 x 0.08 cm (3" x 5" x 0.032") was hand-wiped with methyl ethyl ketone (100%) and a disposable cloth and allowed to air dry prior to chemical cleaning. The panel was immersed in the cleaner solution of **Example A** for 3.5 minutes at ambient temperature with intermittent agitation. The panel was then immersed in two subsequent deionized water rinses for two minutes each, both at ambient temperature with intermittent agitation. After the second rinse, the panel received a cascading deionized water rinse for 10 seconds. The panel was then immersed in the conversion coating of **Example E** for 5 minutes at ambient temperature and without agitation. After the conversion coating, the panel received an immersion rinse in deionized water for 2 minutes at ambient temperature with intermittent agitation followed by a 10 second cascading deionized water rinse. The panel was then immersed in the seal solution of **Example G** for 2 minutes at ambient temperature with intermittent agitation. The panel was air dried at ambient conditions overnight before testing.

### Example HH

Aluminum 2024T3 bare substrate measuring 8 x 13 x 0.08 cm (3" x 5" x 0.032") was hand-wiped with methyl ethyl ketone (100%) and a disposable cloth and allowed to air dry prior to chemical cleaning. The panel was immersed in the cleaner solution of **Example B** for 2 minutes at 55°C with mild agitation. The panel was then immersed in a tap water rinse for one minute at ambient temperature with mild agitation followed by a 10 second cascading tap water rinse. The panel was immersed in a deoxidizing solution of **Example C** for 1.5 minutes at ambient temperature followed by a one minute immersion rinse in tap water at ambient temperature and mild agitation followed by a 10 second cascading rinse. The panel was then immersed in the conversion coating of **Example F** for 5 minutes at ambient temperature and without agitation. After the conversion coating, the panel received an immersion rinse in deionized water for 2 minutes at ambient temperature with intermittent agitation followed by a 10 second cascading deionized water rinse. The panel was then immersed in the seal solution of **Example G** for 2 minutes at ambient temperature with intermittent agitation. The panel was air dried at ambient conditions overnight before testing.

### Example II

Aluminum 2024T3 bare substrate measuring 8 x 13 x 0.08 cm (3" x 5" x 0.032") was hand-wiped with methyl ethyl ketone (100%) and a disposable cloth and allowed to air dry prior to chemical cleaning. The panel was immersed in the cleaner solution of **Example A** for 3.5 minutes at ambient temperature with intermittent agitation. The panel was then immersed in an ambient deionized water rinse for 5 seconds followed by an ambient deionized water immersion rinse for 2 minutes with intermittent agitation. After the second rinse, the panel received a cascading deionized water rinse for 10 seconds. The panel was then immersed in the seal solution of **Example G** for 2 minutes at ambient temperature with intermittent agitation. The panel was air dried at ambient conditions overnight before testing.

### Example JJ

Aluminum 2024T3 bare substrate measuring 8 x 13 x 0.08 cm (3" x 5" x 0.032") was hand-wiped with methyl ethyl ketone (100%) and a disposable cloth and allowed to air dry prior to chemical cleaning. The panel was immersed in the cleaner solution of **Example A** for 3.5 minutes at ambient temperature with intermittent agitation. The panel was then immersed in an ambient deionized water rinse for 5 seconds followed by an ambient deionized water immersion rinse for 2 minutes with intermittent agitation. After the second rinse, the panel received a cascading deionized water rinse for 10 seconds. The panel was then immersed in the conversion coating of **Example L** for 1 minute at ambient temperature and without agitation. After the conversion coating, the panel received an immersion rinse in deionized water for 2 minutes at ambient temperature with intermittent agitation followed by a 10 second cascading deionized water rinse. The panel was air dried at ambient conditions overnight before testing.

### Example KK

Aluminum 2024T3 bare substrate measuring 8 x 13 x 0.08 cm (3" x 5" x 0.032") was hand-wiped with methyl ethyl ketone (100%) and a disposable cloth and allowed to air dry prior to chemical cleaning. The panel was immersed in the cleaner solution of **Example A** for 3.5 minutes at ambient temperature with intermittent agitation. The panel was then immersed in an ambient deionized water rinse for 5 seconds followed by an ambient deionized water immersion rinse for 2 minutes with intermittent agitation. After the second rinse, the panel received a cascading deionized water rinse for 10 seconds. The panel was then immersed in the conversion coating of **Example L** for 1 minute at ambient temperature and without agitation. After the conversion coating, the panel received an immersion rinse in deionized water for 2 minutes at ambient temperature with intermittent agitation followed by a 10 second cascading deionized water rinse. The panel was then immersed in the seal solution of **Example G** for 2 minutes at ambient temperature with intermittent agitation. The panel was air dried at ambient conditions overnight before testing.

### Example LL

Aluminum 2024T3 bare substrate measuring 8 x 13 x 0.08 cm (3" x 5" x 0.032") was hand-wiped with methyl ethyl ketone (100%) and a disposable cloth and allowed to air dry prior to chemical cleaning. The panel was immersed in the cleaner solution of **Example A** for 3.5 minutes at ambient temperature with intermittent agitation. The panel was then immersed in an ambient deionized water rinse for 5 seconds followed by an ambient deionized water immersion rinse for 2 minutes with intermittent agitation. After the second rinse, the panel received a cascading deionized water rinse for 10 seconds. The panel was then immersed in the conversion coating of **Example M** for 1 minute at ambient temperature and without agitation. After the conversion coating, the panel received an immersion rinse in deionized water for 2 minutes at ambient temperature with intermittent agitation followed by a 10 second cascading deionized water rinse. The panel was air dried at ambient conditions overnight before testing.

### Example MM

Aluminum 2024T3 bare substrate measuring 8 x 13 x 0.08 cm (3" x 5" x 0.032") was hand-wiped with methyl ethyl ketone (100%) and a disposable cloth and allowed to air dry prior to chemical cleaning. The panel was immersed in the cleaner solution of **Example A** for 3.5 minutes at ambient temperature with intermittent agitation. The panel was then immersed in an ambient deionized water rinse for 5 seconds followed by an ambient deionized water immersion rinse for 2 minutes with intermittent agitation. After the second rinse, the panel received a cascading deionized water rinse for 10 seconds. The panel was then immersed in the conversion coating of **Example M** for 1 minute at ambient temperature and without agitation. After the conversion coating, the panel received an immersion rinse in deionized water for 2 minutes at ambient temperature with intermittent agitation followed by a 10 second cascading deionized water rinse. The panel was then immersed in the seal solution of **Example G** for 2 minutes at ambient temperature with intermittent agitation. The panel was air dried at ambient conditions overnight before testing.

### Evaluation of the Panels of Examples AA through MM

The panels of Examples AA through MM were analyzed for deposition of lanthanide using X-ray fluorescence (measured using X-Met 7500, Oxford Instruments; operating parameters 60 second timed assay, 15Kv, 45µA, filter 3, T(p) = 1.5µs). Data are reported in Table 14.

For each of Examples AA through MM, one panel was placed in a 3 day exposure and one panel was placed in a 7 day exposure in a neutral salt spray cabinet operated according to ASTM B117. Corrosion performance was evaluated by counting the number of pits visible to the naked eye on the panels. Data are reported in Table 14.

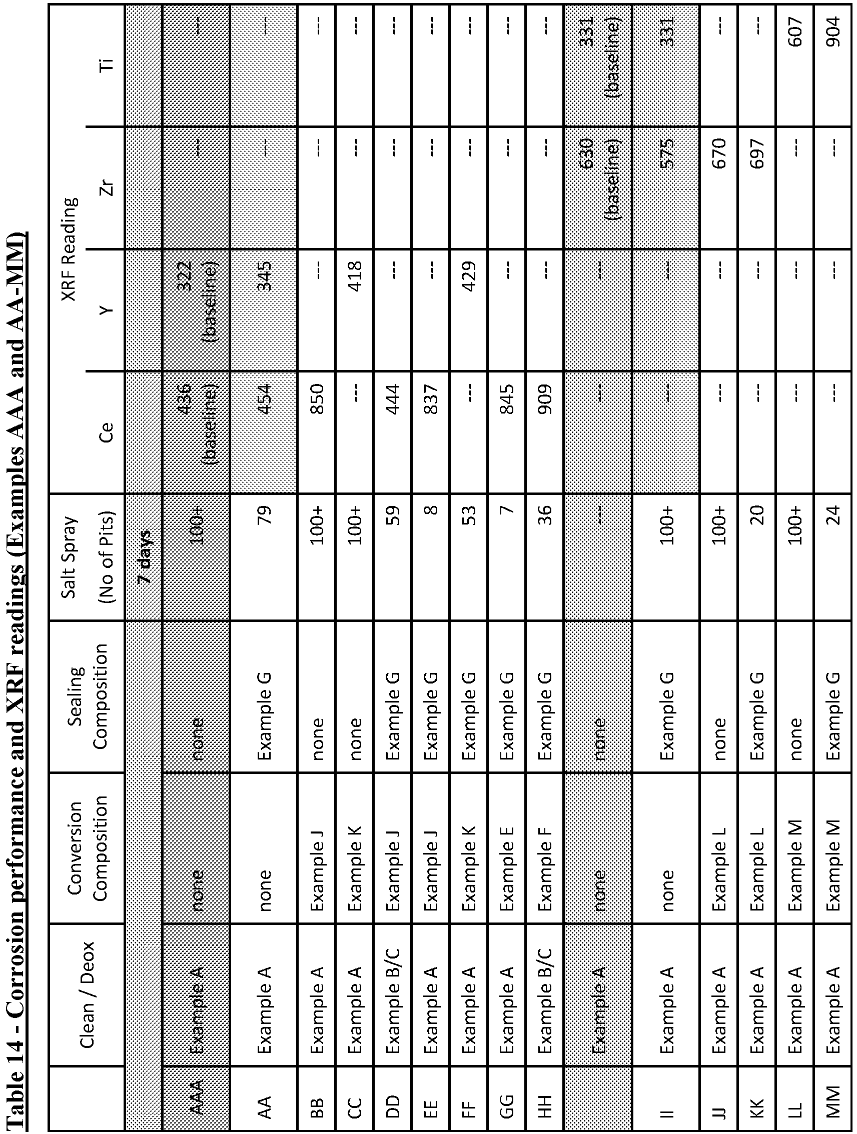

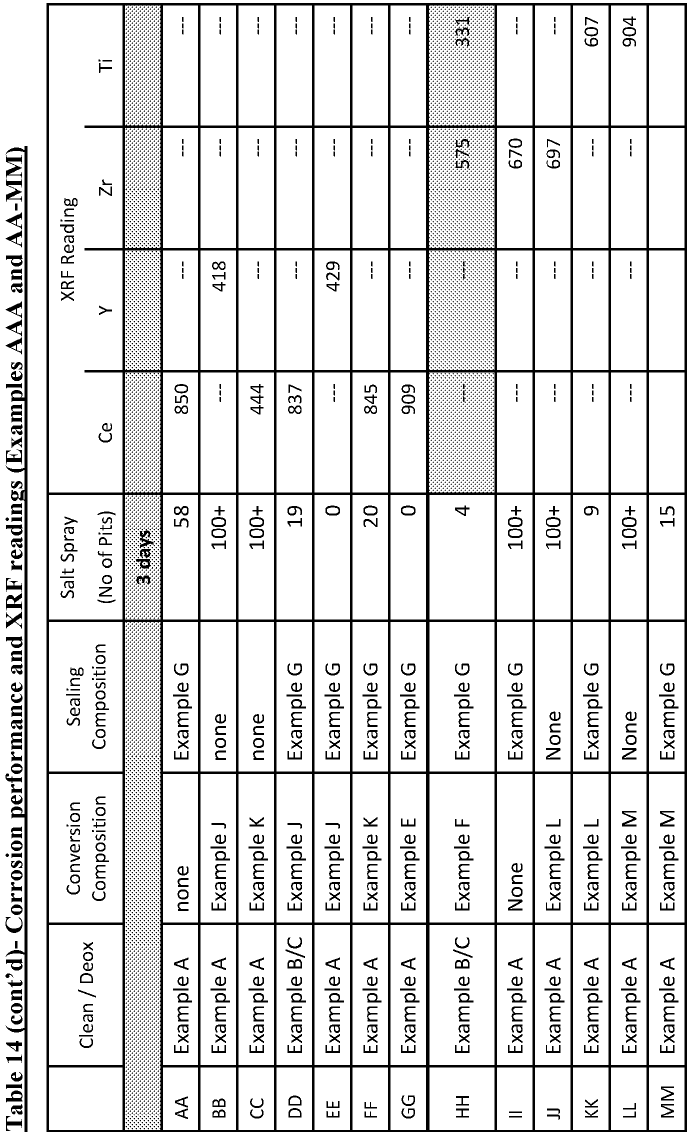

The data in Table 14 above demonstrate that, when compared to a metal substrate that was not treated in accordance with the method of the present invention (Example AAA), a metal substrate that was treated with the sealing composition via the method of the present invention (Example AA) provided a reduction in the amount of corrosion on the treated substrate after exposure to neutral salt spray for 7 days. Evidence of the reduced corrosion is demonstrated by the occurrence of only 79 pits for Example AA versus 100+ pits for Example AAA.

In Example DD, wherein the substrate was first contacted with a conversion coating comprising a lanthanide series element (cerium) and subsequently contacted with a sealing solution comprising a lithium salt, demonstrated a reduced number of corrosion pits after both 3 days and 7 days exposure to neutral salt spray in comparison to both Examples AA (substrate only contacted with the sealing solution) and BB (substrate only contacted with the lanthanide containing conversion coating).

In Example EE, wherein the substrate was first contacted with a conversion coating comprising a lanthanide series element (cerium) and subsequently contacted with a sealing solution comprising a lithium salt, demonstrated greater than a 50% reduction in the number of corrosion pits after both 3 days and 7 days exposure to neutral salt spray in comparison to both Examples AA (substrate only contacted with the sealing solution) and BB (substrate only contacted with the lanthanide containing conversion coating). Additionally, the number of pits were further reduced relative to Example DD and the detectable level of cerium on the substrate was measurably greater than that measured for Example DD.

Example FF, wherein the substrate was first contacted with a conversion coating comprising a lanthanide series element (yttrium) and subsequently contacted with a sealing solution comprising a lithium salt, demonstrated greater than a 50% reduction in the number of corrosion pits after both 3 days and 7 days exposure to neutral salt spray in comparison to both Examples AA (substrate only contacted with the sealing solution) and CC (substrate only contacted with the lanthanide containing conversion coating).

Example GG, wherein the substrate was first contacted with a conversion coating comprising a lanthanide series element (both cerium and yttrium) and subsequently contacted with a sealing solution comprising a lithium salt, demonstrated a reduced number of corrosion pits after 7 days exposure to neutral salt spray in comparison to both Example AA (substrate only contacted with the sealing solution) and Example 1 (substrate only contacted with the lanthanide containing conversion coating).

Example HH, wherein the substrate was first contacted with a conversion coating comprising a lanthanide series element (cerium) and subsequently contacted with a sealing solution comprising a lithium salt, demonstrated a reduced number of corrosion pits after 7 days exposure to neutral salt spray in comparison to both Example AA (substrate only contacted with the sealing solution) and Example 4 (substrate only contacted with the lanthanide containing conversion coating). Additionally, the number of pits were further reduced relative to Example DD and the detectable level of cerium on the substrate was measurably greater than that measured for Example DD.

Example KK, wherein the substrate was first contacted with a conversion coating comprising a Group IVB series element (zirconium) and subsequently contacted with a sealing solution comprising a lithium salt, demonstrated a reduced number of corrosion pits after 7 days exposure to neutral salt spray in comparison to both Examples II (substrate only contacted with the sealing solution) and JJ (substrate only contacted with the Group IVB containing conversion coating).

Example MM, wherein the substrate was first contacted with a conversion coating comprising a Group IVB series element (titanium) and subsequently contacted with a sealing solution comprising a lithium salt, demonstrated a reduced number of corrosion pits after 7 days exposure to neutral salt spray in comparison to both Examples II (substrate only contacted with the sealing solution) and LL (substrate only contacted with the Group IVB containing conversion coating).

### Example NN

Aluminum 6111 panels (from ACT Test Panels, LLC) were cut to 10 x 15 cm (4" x 6") sample size. The bottom 8 cm (3") of the panels were sanded with P320 grit silicon carbide paper (available from 3M) on a 15 cm (6") random orbital palm sander (Advanced Tool Design Model-ATD-2088). Half-sanding the panel surface served to determine any corrosion performance difference between as-milled (unsanded) and sanded substrates. Surface sanding or abrasion is conducted in the field to promote adhesion of subsequent paint applications.

Each of the half-sanded 6111 aluminum panels were spray cleaned with standard Chemkleen 2010LP/181ALP bath (composed of 1.25 vol. % of Chemkleen 2010LP (a phosphate-free alkaline cleaner available from PPG) and 0.125 vol. % of Chemkleen 181 ALP (a phosphate-free blended surfactant additive, available from PPG) in deionized water) in a stainless steel spray tank using vee-jet nozzles at 0.7 to 1 bar (10 to 15psi) for two minutes at 49°C (120°F). This was followed by immersion rinse in DI water for 15 seconds, and final spray rinse with DI water for 15 seconds.

Immediately after spray rinsing, the cleaned panels were introduced into the conversion baths.

The first set of panels were pretreated with Zircobond 1.5, a zirconium-conversion commercially available from PPG Industries, Inc. A 5-gallon bath was prepared as per manufacturer's instruction to yield a pH of 4.72, a zirconium concentration of 200 ppm, and a free fluoride concentration of 101 ppm. The panels were pretreated by immersion into the conversion bath at 27 °C (80 °F) with low agitation, for 2 minutes. The panels were spray rinsed with DI water for 20 to 30 seconds, and air dried using a Hi-Velocity handheld blow-dryer made by Oster^{®} (model number 078302-300-000) on high-setting at a temperature of about 50-55°C until fully dry (about 3 to 5 minutes).

The second set of panels were pretreated with a lithium hydroxide conversion composition. The lithium hydroxide conversion composition was composed of 0.15 wt. % of lithium carbonate (available from Acros Organics) in deionized water. The panels were pretreated by immersion into a 4 litre (3 gallon) bath at ambient temperature for 1 minute, without agitation. Immediately after conversion, the panels were air dried using a Hi-Velocity handheld blow-dryer made by Oster^{®} (model number 078302-300-000) on high-setting at a temperature of about 50-55°C until fully dry (about 3 to 5 minutes).

The third set of panels were pretreated with a lithium carbonate conversion composition. The lithium carbonate conversion composition was composed of 0.15 wt. % of lithium carbonate (available from Acros Organics) in deionized water. The panels were pretreated by immersion into a 4 litre (3 gallon) bath at ambient temperature for 1 minute, without agitation. Immediately after conversion, the panels were air dried using a Hi-Velocity handheld blow-dryer made by Oster^{®} (model number 078302-300-000) on high-setting at a temperature of about 50-55°C until fully dry (about 3 to 5 minutes).

The pretreated panels were electrocoated with cationic ED6280Z paint (available from PPG) using rectifier (Xantrex Model XFR600-2). A coating dry film thickness of 0.02 mm (0.8 mil) was achieved by passing a 24.5 C, 21.5 C, and 21.0 C charge for the zirconium, lithium hydroxide, and lithium carbonate conversioned panels, respectively, at a current limit of 0.5 A, and an applied electrical potential of 220 V after a 30 second ramp time using a direct current rectifier (Xantrex Model XFR600-2). The ED6280Z paint bath was maintained at 90°F, with a stir rate of 340 rpm. The electrocoated panels were spray rinsed with DI water. The panels were baked in an electric oven (Despatch Model LFD-1-42) at 177°C for 25 minutes. The coating thickness was measured using a Permascope (Fischer Technology Inc. Model FMP40C).

Two corrosion test methods were utilized to evaluate the corrosion performance of the panels: ASTM G85 A2 Cyclic Acidified Salt Fog Testing for 3 weeks, and a filiform corrosion testing for 6 weeks. For the latter test, the panels were placed horizontally in a dessicator containing a thin layer of 12 N hydrochloric acid (HCl) for 1 hr at ambient temperature, such that only the HCl fumes shall come in contact with the sample. Within 5 mins, the panels were placed in a vertical orientation in a humidity cabinet maintained at 40°C and 80% relative humidity for 6 weeks. Duplicate panels were included for each testing. Prior to corrosion testing, the panels were scribed with an X-configuration. The scribe was positioned with the top legs on the as-milled surface and the bottom legs on the sanded surface. Each leg was 40 mm long.

Corrosion damage was measured as the perpendicular distance from the scribe to tip of the filament or blister. Each panel provided two sets of five measurements: a set from the top legs for the as-milled surface, and another set from the bottom legs for the sanded surface. Measurements were taken from the five longest corrosion sites. The average corrosion damage was calculated based on a total of ten measurements from duplicate panels. All readings were measured using a Fowler Sylvac digital caliper Model S 235.

The average corrosion damage is tabulated in Table 15. Relative to the control Zirconium conversion, both lithium hydroxide and lithium carbonate conversions displayed better corrosion performance on sanded 6111 aluminum alloys. Lithium hydroxide also exhibited superior corrosion performance on the as-milled surface.

**Table 15 Average corrosion damage (Example NN)**

| **Test Method** | **Average Corrosion Damage (mm)** | | | | | |
|---|---|---|---|---|---|---|
| | **As-milled (unsanded)** | | | **Sanded** | | |
| | Zirconium (control) | Lithium Hydroxide | Lithium Carbonate | Zirconium (control) | Lithium Hydroxide | Lithium Carbonate |
| Filiform Corrosion Test | 4.93 | 1.74 | 4.24 | 12.53 | 5.30 | 4.49 |
| ASTM G85 A2 | 2.76 | 1.92 | 5.57 | 10.39 | 5.01 | 5.20 |

## Claims

1. A method of treating a substrate comprising:
contacting at least a portion of the substrate surface with a sealing composition comprising a lithium cation; wherein the sealing composition is applied to provide a layer of the dried sealing composition having a thickness of 5 nm to 550 nm, wherein the pH of the sealing composition is 10 to 12.5, wherein the lithium cation is present in the sealing composition in an amount of 5 ppm to 5500 ppm (as lithium cation) based on total weight of the sealing composition.

2. The method of Claim 1, wherein the sealing composition further comprises a carbonate source, a hydroxide source, or combinations thereof;

3. The method of Claim 1 or Claim 2, wherein the sealing composition further comprises a Group IA metal cation other than lithium, a Group VB metal cation, a Group VIB metal cation, an indicator compound, or combinations thereof; and/or the sealing composition further comprise a nitrogen-containing heterocyclic compound and/or wherein the temperature of the sealing composition is 4.4 °C (40°F) to 71.1 °C (160°F).

4. The method of Claim 1, wherein, following the contacting with the sealing composition, the substrate is not rinsed with water prior to contacting at least a portion of the substrate surface with subsequent treatment compositions.

5. The method of any one of the preceding claims, wherein the contacting is for 1 second to 15 minutes.

6. The method of any one of the preceding claims, further comprising contacting at least a portion of the substrate surface with a conversion composition comprising a lanthanide series metal cation, a Group IIIB metal cation, a Group IVB metal cation, or combinations thereof; wherein the contacting with the conversion composition occurs prior to and/or following the contacting with the sealing composition, wherein the conversion composition preferably is applied to provide a film on the substrate resulting in a level of the lanthanide metal, Group IIIB metal cation, and/or Group IV metal cation on the treated substrate surface of at least 100 counts greater than on a surface of a substrate that does not have the film thereon as measured by X-ray fluorescence (measured using X-Met 7500, Oxford Instruments; operating parameters 60 second timed assay, 15Kv, 45mA, filter 3, T(p) = 1.5ms for lanthanides, Group IIIB metals, and Group IVB metals except zirconium; operating parameters 60 second timed assay, 40Kv, 10mA, filter 4, T(p) = 1.5ms for zirconium).

7. The method of any one of the preceding claims, wherein the substrate comprises aluminum, aluminum alloys, or combinations thereof.

8. The method of Claim 6 or Claim 7, further comprising heating the substrate for 15 minutes to 30 minutes at a temperature of 110°C to 232°C.

9. A system for treating a substrate comprising:
a conversion composition for treating at a least a portion of the substrate, the conversion composition comprising a lanthanide series metal cation, a Group IIIB metal cation, a Group IVB metal cation, or a combination thereof, wherein the lanthanide series metal cation, Group IIIB metal cation and/or the Group IVB metal cation is present in an amount of 50 ppm to 500 ppm, based on a total weight of the conversion composition; and
a sealing composition for treating at least a portion of the substrate, the sealing composition comprising a lithium cation, wherein the pH of the sealing composition is 10 to 12.

10. The system of Claim 9, wherein the lanthanide series metal cation, Group IIIB metal cation and/or Group IVB metal cation comprises cerium, praseodymium, yttrium, zirconium, titanium, or combinations thereof; or wherein the lithium cation is present in the sealing composition in an amount of 5 ppm to 30,000 ppm (as lithium cation) based on a total weight of the sealing composition.

11. The system of Claim 9, further comprising an alkaline cleaning composition comprising an azole.

12. A substrate treated with the method or the system of any one of the preceding claims.

13. The substrate of Claim 12, wherein the substrate has at least a 50% reduction in the number of pits on the substrate surface compared to a substrate not treated with the sealing composition following 3 day exposure in neutral salt spray cabinet operated according to ASTM B117 and/or compared to a substrate treated with the conversion composition or the sealing composition but not the conversion composition and the sealing composition following 7 day exposure in neutral salt spray cabinet operated according to ASTM B117.

14. The substrate of Claim 12, wherein the substrate treated with the system of any one of claims 9 to 11 further comprises a primer layer, an electrocoat layer, and/or a topcoat layer.

## Patentansprüche

1. Ein Verfahren zur Behandlung eines Substrats, umfassend:
In-Kontakt-Bringen mindestens eines Teils der Substratoberfläche mit einer Versiegelungszusammensetzung, die ein Lithiumkation enthält, wobei die Versiegelungszusammensetzung so aufgebracht wird, dass eine Schicht der getrockneten Versiegelungszusammensetzung mit einer Dicke von 5 nm bis 550 nm entsteht, wobei der pH-Wert der Versiegelungszusammensetzung 10 bis 12,5 beträgt, wobei das Lithiumkation in der Versiegelungszusammensetzung in einer Menge von 5 ppm bis 5500 ppm (als Lithiumkation), bezogen auf das Gesamtgewicht der Versiegelungszusammensetzung, vorhanden ist.

2. Das Verfahren nach Anspruch 1, wobei die Versiegelungszusammensetzung ferner eine Carbonatquelle, eine Hydroxidquelle oder Kombinationen davon umfasst.

3. Das Verfahren nach Anspruch 1 oder Anspruch 2, wobei die Versiegelungszusammensetzung ferner ein Gruppe-IA-Metallkation anderes als Lithium, ein Gruppe-VB-Metallkation, ein Gruppe-VIB-Metallkation, eine Indikatorverbindung oder Kombinationen davon enthält und/oder die Versiegelungszusammensetzung ferner eine stickstoffhaltige heterocyclische Verbindung enthält und/oder wobei die Temperatur der Versiegelungszusammensetzung 4,4 °C (40 °F) bis 71,1 °C (160 °F) beträgt.

4. Das Verfahren nach Anspruch 1, wobei nach dem In-Kontakt-Bringen mit der Versiegelungszusammensetzung das Substrat, bevor mindestens ein Teil der Substratoberfläche mit nachfolgenden Behandlungszusammensetzungen in Kontakt gebracht wird, nicht mit Wasser gespült wird.

5. Das Verfahren nach einem der vorstehenden Ansprüche, wobei das In-Kontakt-Bringen 1 Sekunde bis 15 Minuten lang dauert.

6. Das Verfahren nach einem der vorstehenden Ansprüche, das ferner das In-Kontakt-Bringen mindestens eines Teils der Substratoberfläche mit einer Konversionszusammensetzung umfasst, die ein Lanthanoid-Reihe Metallkation, ein Gruppe-IIIB-Metallkation, ein Gruppe-IVB-Metallkation oder Kombinationen davon enthält, wobei das In-Kontakt-Bringen mit der Konversionszusammensetzung vor und/oder nach dem In-Kontakt-Bringen mit der Versiegelungszusammensetzung erfolgt, wobei die Konversionszusammensetzung bevorzugt so aufgebracht wird, dass ein Film auf dem Substrat bereitgestellt wird, der zu einem Gehalt an Lanthanoid Metall, Gruppe-IIIB-Metallkation und/oder Gruppe-IV-Metallkation auf der behandelten Substratoberfläche führt, der mindestens 100 Zähler höher ist als auf einer Oberfläche eines Substrats, das keinen Film darauf aufweist, gemessen mittels Röntgenfluoreszenz (gemessen mit X-Met 7500, Oxford Instruments; Betriebsparameter: 60-Sekunden-Assay, 15 kV, 45 mA, Filter 3, T(p) = 1,5 ms für Lanthanoide, Gruppe-IIIB-Metalle und Gruppe-IVB-Metalle mit Ausnahme von Zirconium; Betriebsparameter: 60-Sekunden-Assay, 40 kV, 10 mA, Filter 4, T(p) = 1,5 ms für Zirconium).

7. Das Verfahren nach einem der vorstehenden Ansprüche, wobei das Substrat Aluminium, Aluminiumlegierungen oder Kombinationen davon umfasst.

8. Das Verfahren nach Anspruch 6 oder Anspruch 7, das ferner das Erhitzen des Substrats für 15 Minuten bis 30 Minuten bei einer Temperatur von 110 °C bis 232 °C umfasst.

9. Ein System zur Behandlung eines Substrats, umfassend:
eine Konversionszusammensetzung zur Behandlung mindestens eines Teils des Substrats, wobei die Konversionszusammensetzung ein Lanthanoid-Reihe Metallkation, ein Gruppe-IIIB-Metallkation, ein Gruppe-IVB-Metallkation oder eine Kombination davon enthält, wobei das Lanthanoid-Reihe Metallkation, Gruppe-IIIB-Metallkation und/oder das Gruppe-IVB-Metallkation in einer Menge von 50 ppm bis 500 ppm, bezogen auf das Gesamtgewicht der Konversionszusammensetzung, vorhanden ist; und
eine Versiegelungszusammensetzung zur Behandlung mindestens eines Teils des Substrats, wobei die Versiegelungszusammensetzung ein Lithiumkation enthält, wobei der pH-Wert der Versiegelungszusammensetzung 10 bis 12 beträgt.

10. Das System nach Anspruch 9, wobei das Lanthanoid-Reihe Metallkation, das Gruppe-IIIB-Metallkation und/oder das Gruppe-IVB-Metallkation Cer, Praseodym, Yttrium, Zirconium, Titan oder Kombinationen davon umfasst oder wobei das Lithiumkation in der Versiegelungszusammensetzung in einer Menge von 5 ppm bis 30.000 ppm (als Lithiumkation), bezogen auf das Gesamtgewicht der Versiegelungszusammensetzung, vorhanden ist.

11. Das System nach Anspruch 9, das ferner eine alkalische Reinigungszusammensetzung enthält, die ein Azol enthält.

12. Ein Substrat, das mit dem Verfahren oder dem System nach einem der vorstehenden Ansprüche behandelt wurde.

13. Das Substrat nach Anspruch 12, wobei das Substrat eine mindestens 50%ige Verringerung der Anzahl von Löchern auf der Substratoberfläche aufweist, verglichen mit einem Substrat, das nicht mit der Versiegelungszusammensetzung behandelt wurde, nach einer 3-tägigen Exposition in einem Salzsprühnebelschrank (pH neutral), der gemäß ASTM B117 betrieben wird, und/oder verglichen mit einem Substrat, das mit der Konversionszusammensetzung oder der Versiegelungszusammensetzung, jedoch nicht mit der Konversionszusammensetzung und der Versiegelungszusammensetzung behandelt wurde, nach einer 7-tägigen Exposition in einem neutralen Salzsprühnebelschrank (pH neutral), der gemäß ASTM B117 betrieben wird.

14. Das Substrat nach Anspruch 12, wobei das mit dem System nach einem der Ansprüche 9 bis 11 behandelte Substrat ferner eine Grundierungsschicht, eine Elektrotauchlackschicht und/oder eine Deckschicht umfasst.

## Revendications

1. Procédé de traitement d'un substrat, comportant le fait de mettre au moins une partie de la surface du substrat en contact avec une composition de colmatage comprenant un cation de lithium, dans lequel on applique la composition de colmatage de manière à obtenir une couche de composition de colmatage séchée qui soit épaisse de 5 à 550 nm, étant entendu que le pH de la composition de colmatage vaut de 10 à 12,5 et que le cation de lithium se trouve présent dans la com-position de colmatage en une proportion de 5 à 5500 ppm (en cation de lithium), rapportée au poids total de la composition de colmatage.

2. Procédé conforme à la revendication 1, dans lequel la composition de colmatage comprend en outre une source de carbonate, une source d'hydroxyde, ou une combinaison de telles sources.

3. Procédé conforme à la revendication 1 ou 2, dans lequel la composition de colmatage comprend en outre un cation d'un métal du Groupe IA autre que le lithium, un cation d'un métal du Groupe VB, un cation d'un métal du Groupe VIB, un composé indicateur, ou une combinaison de tels composants, et/ou la composition de colmatage comprend en outre un composé hétérocyclique azoté, et/ou dans lequel la température de la composition de colmatage vaut de 4,4 °C (40 °F) à 71,1 °C (160 °F).

4. Procédé conforme à la revendication 1, dans lequel, après avoir été mis en contact avec la composition de colmatage, le substrat n'est pas rincé avec de l'eau avant la mise en contact d'au moins une partie du substrat avec des compositions de traitement suivantes.

5. Procédé conforme à l'une des revendications précédentes, dans lequel la durée du contact est de 1 seconde à 15 minutes.

6. Procédé conforme à l'une des revendications précédentes, comportant en outre le fait de mettre au moins une partie de la surface du substrat avec une composition de conversion comprenant un cation d'un métal de la série des lanthanides, un cation d'un métal du Groupe IIIB, un cation d'un métal du Groupe IVB ou une combinaison de tels cations, dans lequel la mise en contact avec la composition de conversion intervient avant et/ou après la mise en contact avec la composition de colmatage, et dans lequel, de préférence, on applique la composition de conversion de manière à obtenir sur le substrat un film qui donne, sur la surface de substrat traitée, un niveau du métal lanthanide, du cation de métal du Groupe IIIB et/ou du cation de métal du Groupe IV plus grand d'au moins 100 « counts » que celui observé sur une surface d'un substrat qui ne porte pas de film, niveau mesuré par fluorescence aux rayons X (mesuré au moyen d'un appareil X-Met 7500, Oxford Instruments ; conditions opératoires : durée d'essai de 60 secondes, 15 kV, 45 mA, filtre 3, et T(p) = 1,5 ms, pour les lanthanides, les métaux du Groupe IIIB et les métaux du Groupe IVB, excepté le zirconium ; durée d'essai de 60 secondes, 40 kV, 10 mA, filtre 4, et T(p) = 1,5 ms, pour le zirconium).

7. Procédé conforme à l'une des revendications précédentes, dans lequel le substrat comprend de l'aluminium, un alliage d'aluminium ou une combinaison de ceux-ci.

8. Procédé conforme à la revendication 6 ou 7, comportant en outre le fait de chauffer le substrat, pendant 15 minutes à 30 minutes, à une température de 110 °C à 232 °C.

9. Système de traitement d'un substrat, comprenant :
une composition de conversion pour le traitement d'au moins une partie du substrat, laquelle composition de conversion comprend un cation d'un métal de la série des lanthanides, un cation d'un métal du Groupe IIIB, un cation d'un métal du Groupe IVB ou une combinaison de tels cations, étant entendu que le cation d'un métal de la série des lanthanides, le cation d'un métal du Groupe IIIB et/ou le cation d'un métal du Groupe IVB se trouve(nt) présent(s) en une proportion de 50 ppm à 500 ppm, rapportée au poids total de la composition de conversion ;
et une composition de colmatage pour le traitement d'au moins une partie du substrat, laquelle composition de colmatage comprend un cation de lithium, étant entendu que le pH de la composition de colmatage vaut de 10 à 12.

10. Système conforme à la revendication 9, dans lequel le cation d'un métal de la série des lanthanides, le cation d'un métal du Groupe IIIB et/ou le cation d'un métal du Groupe IVB comprend ou comprennent cérium, praséodyme, yttrium, zirconium, titane, ou une combinaison de ceux-ci ; ou dans lequel le cation de lithium se trouve présent dans la composition de colmatage en une proportion de 5 à 30 000 ppm (en cation de lithium), rapportée au poids total de la composition de colmatage.

11. Système conforme à la revendication 9, qui comprend en outre une composition alcaline de nettoyage comprenant un azole.

12. Substrat traité par un procédé ou avec un système conforme à l'une des revendications précédentes.

13. Substrat conforme à la revendication 12, lequel substrat présente à sa surface des piqûres en un nombre réduit d'au moins 50 %, en comparaison d'un substrat qui n'a pas été traité avec la composition de colmatage, après trois jours d'exposition en chambre à brouillard salin neutre fonctionnant selon la norme ASTM B117, et/ou en comparaison d'un substrat qui a été traité soit avec la composition de conversion, soit avec la composition de colmatage, mais non pas avec la composition de conversion et avec la composition de colmatage, après sept jours d'exposition en chambre à brouillard salin neutre fonctionnant selon la norme ASTM B117.

14. Substrat conforme à la revendication 12, lequel substrat, traité avec un système conforme à l'une des revendications 9 à 11, comprend en outre une couche de primaire, une couche obtenue par électrodéposition et/ou une couche de revêtement de dessus.
